(19) Europäisches Patentamt
European Patent Office
Office européen des brevets

(11) EP 3 661 643 B1

(12) **EUROPEAN PATENT SPECIFICATION**

(45) Date of publication and mention of the grant of the patent:
**11.10.2023 Bulletin 2023/41**

(21) Application number: **18746954.9**

(22) Date of filing: **02.08.2018**

(51) International Patent Classification (IPC):
***B01J 20/20*** *(2006.01)* ***B01J 20/28*** *(2006.01)*
***B01J 20/30*** *(2006.01)* ***B01D 53/02*** *(2006.01)*
***C01B 32/318*** *(2017.01)*

(52) Cooperative Patent Classification (CPC):
**B01J 20/20; B01D 53/02; B01J 20/28042; B01J 20/28045; B01J 20/3078; C01B 32/318;**
B01D 2253/102; B01D 2253/25; B01D 2253/3425; B01D 2256/22; B01D 2256/245; B01D 2257/504; B01J 2220/4812; C01P 2006/12; Y02C 20/40;

(Cont.)

(86) International application number:
**PCT/EP2018/070995**

(87) International publication number:
**WO 2019/025544 (07.02.2019 Gazette 2019/06)**

(54) **A METHOD FOR FORMING AN ADSORPTIVE CARBONACEOUS SHAPED BODY AND SHAPED GREEN BODY AND ADSORPTIVE CARBONACEOUS BODIES OBTAINED THEREFROM**

VERFAHREN ZUR HERSTELLUNG EINES KOHLENSTOFFHALTIGEN ADSORPTIVEN FORMKÖRPERS UND GEFORMTER GRÜNKÖRPER UND KOHLENSTOFFHALTIGER ADSORPTIVER KÖRPER DARAUS

PROCÉDÉ DE FORMATION D’UN CORPS FORMÉ CARBONÉ ADSORBANT ET CORPS CRU FORMÉ ET CORPS CARBONÉS ADSORBANTS OBTENUS À PARTIR DE CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2017 EP 17184587**

(43) Date of publication of application:
**10.06.2020 Bulletin 2020/24**

(73) Proprietor: **Solvay SA**
**1120 Bruxelles (BE)**

(72) Inventors:
- **FINSY, Vincent**
**1500 Halle (BE)**
- **DUBOIS, Eric, Pierre**
**4219 Wasseiges (BE)**

(74) Representative: **Benvenuti, Federica et al**
**Solvay S.A.**
**Département de la Propriété Intellectuelle**
**Rue de Ransbeek, 310**
**1120 Bruxelles (BE)**

(56) References cited:
**WO-A1-03/008068 WO-A1-2015/109381**
**WO-A1-2016/003680 JP-A- H10 265 273**

EP 3 661 643 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
Y02P 20/151

## Description

**Reference to a related application.** This application claims priority to European application No. 17184587.8 filed on August 02, 2017.

The present invention relates to a method for forming an adsorptive carbonaceous shaped body and to the shaped green body and shaped adsorptive carbonaceous bodies obtained therefrom as defined in the appended claims.

It is generally admitted that the use of solid adsorbents for purification can offer an economic, energetic and ecological advantage over conventional processes such as distillation, liquid based absorption processes or extraction processes. A few examples of separation technologies include pressure swing adsorption (PSA), temperature swing adsorption (TSA), vacuum swing adsorption (VSA), electric swing adsorption (ESA) and combination of vacuum and temperature swing adsorption (VTSA) or combination of vacuum and pressure swing adsorption (VPSA). Although both PSA and TSA are commercially available technologies and are widely used in the industry, the application of adsorption technologies in processes where very large feed stream volumes need to be treated still remains challenging. This is particularly true for the capture and purification of $CO_2$ from $CO_2$ containing feed streams such as flue gas and natural gas.

TSA involves a first step for the selective adsorption of one component at low temperature and a second step where a temperature rise of the adsorbent is responsible for the increase of the mole fraction of the adsorbed component in the gas phase, hence purifying the product stream. In order to render TSA process viable, a rapid temperature-swing adsorption (RTSA) process, where the adsorbent can be rapidly cycled through adsorption, regeneration, and cooling steps, is required.

Porous carbon has been used in many applications such as water treatment, air purification or gas storage. Carbonization under inert atmosphere of various precursors has been considered to produce efficient materials. Generally, carbonization is followed by an activation step in an oxidative atmosphere to enhance the surface area so that the materials can be used as porous carbon.

The manufacture of shaped bodies through extrusion of ceramic pastes is known and has been described in the prior art.

In many cases, activated carbon is used and mixed with binders and processing aids to obtain an extrudable composition. US 5,914,294, US 4,518,704 and US 2002/0103081 describe respective processes where inorganic binders are used in combination with activated carbon to extrude a shaped body which is thereafter subjected to firing.

The use of organic binders as a substitute for inorganic binders or in combination with inorganic binders is described in US 5,356,852 and US 5,389,325. According to US 5,356,682 a combination of a cellulose ether with a polyvinyl alcohol is used as a binder, whereas in US 5,389,326 a phenolic resin serves the purpose as organic binder.

In US 2003/0178357 a combination of a phenolic resin with an inorganic binder is used.

In all cases activated carbon is the carbon component used in the extrudable pastes. No conversion of a carbon precursor material to the final porous carbon takes place.

US 2011/0262689 discloses use of cellulose ethers as binders or processing agents in extrudable pastes, but the pastes are based on either inorganic materials or activated carbon, but not on polymer resins.

Further examples showing the use of cellulose ethers as processing aids for the extrusion of ceramic pastes are given in US 2012/0276324 and US 8,354,055.

US 2005/0066817 discloses mechanically stable porous activated carbon molded bodies comrpising a lattice structure including carbonized resin and pyrolyzed silcone resin with activated carbon embedded in said lattice structure. Halogenated poymers are not mentioned amongst the carbonizable resins.

The carbonization of vinylidene chloride or fluoride polymers is triggered without any need of catalytic input and the resulting carbonaceous materials do not require any activation step to generate desired porosity. While both vinylidene chloride and fluoride polymers may be good candidates as precursor of porous carbonaceous structure, vinylidene chloride is generally preferred as its decomposition requires less demanding temperatures than vinylidene fluoride does and, as its thermal decomposition generates hydrochloric acid which is easier to handle than hydrogen fluoride.

Vinylidene chloride polymer as precursor of porous carbonaceous material has been described. However, only few documents deal with the manufacture of carbon monolith starting from such polymer. Indeed carbon monoliths are generally manufactured by mixing porous carbon powders with a binder and by pressing the resulting mixture into appropriate shape. Among them, WO 2015/109381 discloses the manufacture of polyvinylidene chloride (PVDC) monolith by mixing of PVDC particles with a PVDC latex followed by drying of the mixture under vacuum at relatively low temperature. As a result, the dried latex ensures the cohesion of the PVDC particles in the monolith acting as a binder for the particles. The PVDC monolith is then heated by increasing at a slow rate the temperature and thus is stepwise pyrolized under inert atmosphere in a mould to give a carbonaceous material. This method has the advantage that the binder and the particles are of the same chemical nature and that consequently, they shall follow the same degradation pathway to give the carbonaceous material. However, there is a good chance that said binder blocks the access to the porosity of the resulting carbonaceous monolith.

In US 2004/0107838, PVDC particles are pressure moulded before being carbonized to give a porous monolith useful for the manufacture of devices capable of gas/fluid storage. According to the procedure, the pressure which is used is exceeding 600 bars, which is detrimental to the macroporosity of the final porous carbonaceous monolith.

JPH10265273 A discloses inorganic powder compositions for moulding high strength products containing inorganic powder and vinylidene chloride resin.

In the field of porous carbonaceous materials for gas adsorption, more particularly for $CO_2$ adsorption, it is well known that the amount of $CO_2$ adsorbed is, for a high proportion, due to the presence of micropores. Moreover, in order to ensure an efficient mass transfer of gas, which is a key parameter for high adsorption and desorption kinetics in fast cycling process, a highly connected macroporous network is required to supply the microporous network.

According to all the above, the applicant has identified some needs in the domain of the use of solid adsorbents for purification.

There is a need for the development of adsorption and desorption processes operating in fast cycles.

There is a need for the development of suitable adsorbents and of monolithic adsorbent structures for these processes.

There is a need for a green shaped body which has been obtained by extrusion of agglomerated particles comprising a halogenated polymer manufactured without using any binder.

There is a need for an easy to perform and low demanding process for manufacturing such a green shaped body having a high macroporosity and for porous carbon shaped bodies obtained thereby.

There is a need for a carbonaceous monolith structure comprising particles; said particles exhibiting a microporosity for improved selective adsorption of gas and a macroporosity for enhanced mass transfer of said gas and/or of gaseous mixture comprising said gas.

There is a need for a porous carbonaceous monolith comprising such agglomerated particles presenting an inter-particles macroporosity.

There is a need for an easy to perform and low demanding process for manufacturing such monolith structures.

There is a need for such honeycomb structures having selective $CO_2$ capacity.

Finally there is a need for a simple, low time consuming and low cost process suitable for manufacturing these honeycomb structures.

It was thus an object of the present invention to provide a method for forming an adsorptive carbonaceous shaped body overcoming the problems known in the prior art or at least to improve the known processes in terms of efficiency and performance.

This object is achieved with the process in accordance with claim 1.

Preferred embodiments of the method in accordance with the present invention are set forth in the dependent claims and the detailed specification hereinafter.

Another object of the invention is shaped green bodies obtainable or obtained in the course of the process in accordance with the present invention as defined in claims 9 and 10. Also disclosed are adsorptive carbonaceous shaped bodies obtainable or obtained after pyrolysis of said shaped green bodies.

According to the first step of the method in accordance with the present invention an extrudable composition comprising a1) a carbon precursor containing a halogenated polymer having a melting point, a2) a solvent and a3) 0.1 to 8 wt%, based on the weight of the carbon precursor, of a processing aid selected from polysaccharides, polysaccharide derivatives, polyalkylene oxides, polyalkylene oxide derivatives, polyvinyl alcohol or polyvinyl alcohol derivatives or mixtures thereof, is provided.

Extrudable composition for the purpose of the present invention denotes a composition which can be extruded through a die.

The halogenated polymer a1) suitable for the present invention is advantageously chosen from vinylidene chloride polymers and vinylidene fluoride polymers.

When a vinylidene fluoride polymer is selected, it may be a vinylidene fluoride homopolymer or a vinylidene fluoride copolymer comprising repetitive units derived from at least one comonomer preferably chosen from the group consisting of trifluoroethylene, tetrafluoroethylene, hexafluoropropylene, chlorotrifluoroethylene and chlorofluoroethylene.

The inventors have found that vinylidene chloride polymers are particularly suitable for the invention in certain cases. It may be a vinylidene chloride homopolymer or a vinylidene chloride copolymer comprising repetitive units derived from at least one comonomer preferably chosen from the group consisting of vinyl chloride, acrylonitrile, acrylic acid, alkyl acrylates, methacrylic acid and alkyl methacrylates.

When the vinylidene chloride polymer is a copolymer; it is advantageously a copolymer comprising repetitive units derived from vinyl chloride or an alkyl acrylate.

When the vinylidene chloride copolymer comprises repetitive units derived from an alkyl acrylate, this alkyl acrylate is preferably butyl acrylate or methyl acrylate; more preferably it is methyl acrylate.

The vinylidene chloride polymer preferably comprises at least 55 % of repetitive units, with regard to the totality

of the repetitive units, derived from (preferably resulting from the free radical polymerization of) vinylidene chloride, more preferably at least 65 % and even more preferably at least 75 %. As the skilled person will understand, the percentages (%) are molar percentages.

Good results have been obtained with IXAN® PV708 and IXAN® PV925 vinylidene chloride copolymers, comprising vinyl chloride or methyl acrylate moieties, commercialized by Solvay Specialty Polymers.

Particles, comprising vinylidene fluoride or vinylidene chloride polymer, suitable for the invention are generally prepared via emulsion or suspension polymerization.

When the particles are prepared by emulsion polymerization, a step of coagulation of the polymer latex is advantageous to obtain particles of a desired mean diameter. This coagulation step may be performed according to any process well-known to a person having ordinary skill in the art for example by neutralizing the emulsifying agent, which is commonly anionic, using polyvalent cations.

The particles comprising the halogenated polymer are preferably prepared by a suspension polymerization process using at least one suspending agent and at least one organosoluble free radical initiator.

The particles comprising the halogenated polymer are advantageously containing less than 50 ppm of remaining monomer, more preferably less than 30 ppm even more preferably less than 20 ppm. This low remaining monomer content can be obtained for example by a stripping process of the slurry or by any process well-known by a person skilled in the art. The particles are generally recovered from the slurry by filtration and may be washed before being dried. Drying is generally accomplished in a fluidized bed but any other process can be used.

As a result of their manufacturing process, the particles comprising the halogenated polymer are generally highly porous.

The porosity of the particles comprising the halogenated polymer may be characterized by the amount of a plasticizer, properly selected by the person skilled in the art, absorbed by said polymer. The nature of the plasticizer is generally depending on the nature of said polymer. For the particles comprising vinylidene chloride polymer, the porosity may be characterized by the amount of e.g. di-iso-nonylphtalate (DINP) used as plasticiser absorbed and expressed in wt. %, relative to the amount of polymer powder. For this purpose, the polymer powder is transferred in a stainless steel centrifugation tube with conical bottom (90°), containing a 0.8 mm opening at the bottom and a large excess (about twice the mass of the sample) of di-isononyl-phtalate (DINP) is added. After 15 minutes of absorption at room temperature, the DINP in excess is removed by centrifugation at 3200 g for 30 minutes. The amount of DINP absorbed by the polymer powder is expressed in weight percent of the total weight of the polymer sample introduced in the centrifugation tube.

Generally the DINP absorption of the vinylidene chloride polymer powder is at least 4 wt. %, preferably at least 8 wt. %, more preferably at least 10 wt. % and even more preferably at least 11 wt. %. Generally the DINP absorption by the polymer powder is at most 26 wt. %, preferably is at most 22 wt. %, more preferably at most 20 wt. % and even more preferably at most 18 wt. %.

The melting point of the polymer may be determined by differential scanning calorimetry using the peak temperature of the endotherm.

When the halogenated polymer is vinylidene fluoride polymer, the melting point is dependent upon the composition of the polymer. Generally the melting point is ranging from 120°C to 175°C.

When the halogenated polymer is vinylidene chloride polymer, the melting point is also dependent upon the composition of the polymer. Generally the melting point is ranging from 130°C to 210°C. When the vinylidene chloride polymer is vinylidene chloride homopolymer, the melting point is generally ranging from 150°C to 210°C.

The particles of the halogenated polymer may comprise other ingredients such as lubricants, dispersing agents, demolding agents, adhesive agents, thermal stabilizers, plasticizers and fillers. These additives may also be added separately to the extrudable composition before extrusion.

In a special embodiment (E*), which can be used alternatively or complementarily to preferred embodiment (E) which will be disussed later on, the particles of the halogenated polymer comprise at least one lubricant a4*). The nature of the lubricant a4*) is identical to the nature of the lubricant a4) and preferred lubricants a4) are also preferred for use as lubricants a4*). In accordance with embodiment (E*), the amount of the lubricant a4*), based on the total weight of the composition comprising the halogenated polymer (which comprises the lubricant as additive), the solvent and the processing aid, is identical to and meets all the preferences set forth hereinafter for the lubricant a4), wherein the amount of lubricant a4) will be based on the total weight of the composition comprising the halogenated polymer, the solvent, the processing aid and the lubricant.

According to the invention, the content of the particles comprising the halogenated polymer (the carbon precursor material) with regard to the total weight of the extrudable composition excluding the solvent content and the amount of processing aid selected from polysaccharides, polysaccharide derivatives, polyalkylene oxides, polyalkylene oxide derivatives, polyvinyl alcohol or polyvinyl alcohol derivatives or mixtures thereof is at least 65 wt. %. It is preferably at least 75 wt. %, more preferably at least 85 wt. % and even more preferably at least 95 wt. %. Besides, it has been found advantageous to use a carbon precursor material essentially composed of the particles comprising the halogenated polymer and more advantageous to use a carbon precursor material composed of particles comprising the halogenated

polymer.

According to an embodiment of the invention, the halogenated polymer in the carbon precursor is present in the form of porous macroparticles having a mean diameter $D_{50}$ in the range of from 5 to 1000 $\mu$m.

In a first preferred embodiment, the mean diameter $D_{50}$ of the particles comprising the halogenated polymer, is ranging from 5 to 140 $\mu$m, preferably of from 20 to 140 $\mu$m. It has been found advantageous that, at least 80 vol. % of said particles (III) have a diameter, determined by laser difFraction analysis, ranging from 5 to 200 $\mu$m, preferably at least 85 vol. % and more preferably at least 90 vol. %. Good results can be obtained when at least 65 vol. % of said particles (III) have a diameter, determined by laser difFraction analysis, ranging from 5 to 160 $\mu$m, preferably at least 70 vol. % and more preferably at least 75 vol. %.

In another embodiment, the mean diameter $D_{50}$ of the particles comprising the halogenated polymer is generally of at least 145 $\mu$m, and of at most 1000 $\mu$m, preferably of at most 400 $\mu$m. Good results can be obtained with particles having a mean diameter $D_{50}$ of at most 300 $\mu$m, possibly of at most 250 $\mu$m, eventually of at most 220 $\mu$m.

The particle size may be determined by laser difFraction analysis with a Mastersizer 2000 equipment from Malvern. The sample is examined in ethanol with a stirring of 2000 rpm and an obscuration setting ranging from 3 to 10 %. The refractive index used for vinylidene chloride polymers is 1.52. The mean diameter $D_{50}$ is the size in microns at which 50 % of the particles in the sample are smaller and 50 % are larger and the size of the so called distribution span is calculated as

$$span = \frac{D_{90} - D_{10}}{D_{50}}$$

The narrower the distribution, the smaller the distribution span becomes.

In accordance with a preferred embodiment of the process of the present invention, polymer particles are used as component a1) which have been subjected to a process for reducing their size compared to the size obtained directly after the polymerization. Usually, after polymerization, the halogenated polymer particles have a size in the range of from 80 to 800 $\mu$m, determined by laser difFraction analysis. If the respective particles are subjected to a cryogenic freezing followed by grinding or milling, the particle size can be reduced.

As a matter of example, the particles may be frozen by spraying of a cryogenic fluid. The cryogenic fluid is preferably liquid helium, liquid nitrogen or mixtures thereof. It is more preferably liquid nitrogen.

Grinding of the frozen particles may be conducted in the presence or the absence of a medium.

Grinding of the frozen particles is preferably conducted in the presence of a media, more preferably in a ball mill

As component a2) the extrudable compositions of the first step of the method in accordance with the present invention comprises a solvent a2).

The term solvent, as used in the context of the present invention, is intended to represent any liquid which is capable to solubilize the processing aid a3) but substantially incapable of solubilizing the carbon precursor component a1) (in particular substantially incapable of solubilizing the halogenated polymer). This means that the solubility of the processing aids a3) in the solvent is at least 1g/l whereas the solubility of the component a1) in the solvent does not exceed 0.1 g/l, i.e. the ratio of the solubilities of both components differs by at least a factor of 10.

The solvent has to be added before extrusion to achieve the extrudability of the composition (a dry product is not extrudable; a sufficient amount of solvent is needed). If the halogenated polymer is obtained as a suspension after manufacture, this suspension could eventually be used directly (provided the solvent of the suspension is able to solubilize the processing aid a3)) and thereby an amount of solvent would also be introduced. It would then depend on the amount of solvent in the suspension whether additional solvent to make the composition extrudable would be necassary. The skilled person will know, based on his professional experience, how much solvent will be necessary and will proceed accordingly.

The amount of solvent in the extrudable compositions is usually in the range of from 20 wt% to 50 wt%, often in the range of from 25 wt% to 50 wt%.

In certain embodiments of the present invention, especially when the particles of the halogenated polymer are free of lubricant and when the extrudable compositions of the first step of the invented method are free of lubricant, the amount of solvent in the extrudable compositions ranges preferably from 30 wt% to 45 wt% and more preferably from 33 wt% to 42 wt%, based on the total weight of the composition comprising the halogenated polymer, the solvent and the processing aid selected from polysaccharides, polysaccharide derivatives, polyalkylene oxides, polyalkylene oxide derivatives, polyvinyl alcohol or polyvinyl alcohol derivatives or mixtures thereof.

In certain other embodiments of the present invention, especially when the particles of the halogenated polymer comprise at least one lubricant a4*) in accordance with embodiment (E*) as previously detailed and/or when the extrudable compositions of the first step of the invented method comprise at least one lubricant a4) in accordance with embodiment

(E) as detailed hereinafter, the amount of solvent in the extrudable compositions ranges preferably from 20 wt% to 40 wt%, more preferably from 25 wt% to 35 wt% and still more preferably from 25 wt% to 30 wt%, based on the total weight of the composition.

A preferable solvent for ease of processing is water or a solvent mixture comprising predominantly water, but in principle organic solvents such as alcohols or aldehydes may also be used provided they are stable in the extrusion process and do not evaporate in the course of the extrusion.

The extrudable composition used in step a) is preferably in the form of a paste.

The extrudable compositions used in step a) of the method in accordance with the present invention comprise as component a3) 0.1 to 8, preferably 0.2 to 7 and even more preferably 0.5 to 6 wt%, based on the weight of the carbon precursor a1), of a processing aid a3) selected from polysaccharides, polysaccharide derivatives, polyalkylene oxides, polyalkylene oxide derivatives, polyvinyl alcohol or polyvinyl alcohol derivatives or mixtures thereof.

The term processing aid, as used in the context of the present invention, is intended to represent any additive, or mixture of additives, that generally fulfills a number of functions, in particular the following functions.

1. Provide the correct rheological properties to the paste. Typically, pseudoplastic liquids with high viscosity (at low shear rate) and a quick drop in viscosity with shear rate are advantageous.
2. Provide sufficient water retention. The processing aid should assure a sufficient stability of the formulation throughout the extrusion process. Pressing the highly viscous paste through small openings of the (honeycomb) dies generates a significant pressure drop. Solvent (in particular water) should preferably not be released (filtered out) from the formulation at elevated pressure when the paste is pressed through the small openings of a die during the extrusion process.

The processing aid also usually improves the binding strength in the green monolith. This binding strength is advantageous to maintain structural integrity of both the extruded, wet and dried green monolith. In the wet green monolith the processing aid helps to assure structural integrity during the drying step and during transport to the drying facility. In the dried green monolith, the processing aid helps to assure structural integrity of the shaped green body upon transport to the carbonization facility.

Preferably, the processing aid has no or only a very small negative effect on the development of the micropore structure of the carbon precursor (halogenated resins) during pyrolysis. The processing aid frequently has no or a limited impact on the mechanical properties of the final porous carbon shaped body obtained after pyrolysis. In some cases, the processing aid is able to participate in the formation of a porous carbon structure, bridging and binding the porous carbon particles together.

The processing aid should fulfill the above mentioned roles, at loadings as low as possible in order to prevent pore blocking and dilution of the active material.

The processing aid, according to the present invention, is typically present at loadings of 0.1 to 8, preferably 0.2 to 7 and even more preferably 0.5 to 6 wt%, based on the weight of the carbon precursor a1).

Polysaccharide (in particular cellulose ether) processing aids are usually used at loadings of from 0.5 to 6 wt%, preferentially of from 1 to 5 and even more preferentially of from 2 to 4 wt%, based on the weight of the carbon precursor a1).

Polyethylene oxide processing aids are preferably used at loadings of from 0.5 to 6 wt%, preferentially of from 2 to 5 and even more preferentially of from 3 to 5 wt%, based on the weight of the carbon precursor a1).

Polyvinyl alcohol or polyvinyl alcohol derivatives processing aids are preferably used at loadings of from 4 to 8 wt%, preferentially of from 4 to 6wt%, based on the weight of the carbon precursor a1).

Molecular weight and chemistry of the component a3) influence the properties of the final product. High molecular weight polymers are able to produce an extrudable paste with a suitable viscosity at low loadings, in many cases below 5 wt%, of component a3). The viscosity of preferred polymers suitable as component a3) in the method in accordance with the invention is preferably at least 40 mPa.s, preferably at least 150 mPa.s, more preferably at least 400 mPa.s and in some cases most preferably exceeding 1000 mPa.s. In many cases the visosity is at most 20000 mPa.s, preferably at most 15000 mPa.s and most preferably at most 10 000 mPa.s. This means that the viscosity of the component a3) is preferably in the range of from 40 to 20000, 150 to 20000 or 400 to 20000 mPa.s, preferably in the range of from 40 to 15000 or 150 to 15000 or 400 to 15000 mPa.s, even more preferably in the range of from 40 to 12000, from 150 to 12000 or 400 to 12000 mPa.s. The viscosities are determined at 20°C and a shear rate of 8 $s^{-1}$ for 4 wt% solutions of polyvinyl alcohols or derivatives and for 2 wt% solutions of polyalkylene oxides and derivatives and for 2 wt% solutions for polysaccharides and polysaccharide derivatives.

The term polysaccharides, when used in the context of the present invention, refers to polymeric carbohydrate molecules constiututed by long chains of monosaccharide units bound together by glycosidic linkages. Examples include agar, amylopectin, amylose, arabinoxylan, cellulose, chitin, chitiosan, dextran, dextrin, fructan, galactomannan, glucan, glycogen, guar gum, hemicellulose, lentinen, lichenin, mannan, natural gum, pectin, polysaccharide peptide, sepharose, starches,(e.g. of amaranth, arrowroot, banana, cassava, coconut, corn, pea, plantain, potato, quinoa, rice, sorghum,

tapioca, wheat etc.), welan gum, xanthan gum and xylan, among others. Preferred polysaccharides are cellulose, hemicellulose and guar gum.

The term polysaccharide derivatives, when used in the context of the present invention, refers to polysaccharides in which the hydrogen atoms of the hydroxyl groups in the repeating unit of the polysaccharide have been replaced, partly or wholly, by other atoms or groups such as alkyl groups, carboxyalkyl or hydroxyalkyl groups, to name only three examples of modifications. The respective reaction is generally known as etherification reaction.

A first group of suitable polysaccharides suitable for use as component a3) in the compositions used in step a) of the method in accordance with the present invention are guar gums and derivatives thereof. Guar gum is a polysaccharide composed of the sugars galactose and mannose. The backbone is a linear chain of β 1,4-linked mannose residues to which galactose residues are 1,6-linked at every second mannose, forming short side-branches.

A variety of suitable guar gums and derivatives thereof are commercially available under the tradenames Jaguar® and Tiguar® from Solvay group. This includes hydroxypropyl derivatized guar gum (e.g. Jaguar® HP 120, molecular weight 2-3 mio Da), quaternary ammonmium derivatives of guar gum (e.g. Jaguar® C-14S and C-17S, C-14 S having a degree of substitution of 0.6 to 0.8 meq/g whereas C-17 S has a degree of substition of 0.9-1.1 meq/g, both products having a molecular weight in the range of from 2-3 mio Da) and carboxymethyl hydroxypropyl guar (e.g. Tiguar® 418), of which the quaternary ammonium derivatives and the carboxymethyl hydroxypropyl guar have found to be advantageous in a number of cases.

A particularly preferred group of polysaccharides are cellulose ethers, i.e. celluloses wherein part of the hydrogen atoms of the hydroxyl group in the repeating glucose unit have been replaced by other atoms or groups.

Cellulose ethers are commercialy available in a huge variety and the skilled person will select suitable cellulose ethers based on his professional experience and taking into account the specific application sutuation.

Suitable cellulose ethers may e.g. be ionic cellulose ethers such as sulphoethylcellulose or carboxymethylcellulose and salts thereof, e.g. sodium-carboxymethylcellulose, sodium-sulphoethylcellulose or the respective salts with other cations such as potassium or ammonium or the like.

Also suitable are non-ionic cellulose ethers such as alkylcelluloses, hydroxyalkyl alkylcelluloses or hydroxyalkylcellulose, in particular methylcellulose, methyl hydroxyethylcellulose, methyl hydroxypropylcellulose, hydroxyethylcellulose, ethyl hydroxyethylcellulose, methyl ethylhydroxyethylcellulose, methyl hydroxyethylhydroxypropylcellulose, methyl hydroxyethylhydroxybutylcellulose or cellulose ethers which at the same time comprise methyl groups and longer chain hydrophobic side chains or mixtures of the abovementioned products.

celluloses wherein part of the hydrogen atoms of the hydroxyl group in the repeating glucose unit have been replaced by alkyl, carboxyalkyl or hydroxyalkal groups or combinations of such substituents have been found to be particularly preferable in a number of application situations.

It has been found in a number of cases that cellulose ethers are more effective as processing aid than guar gum derivatives, i.e. higher amounts of guar gum or derivatives are needed compared to cellulose ethers or derivatives to achieve the desired properties of the paste to be extruded in the first step of the method in accordance with the present invention.

Just by way of example, methyl cellulose (available from DOW Chemical group under the tradename Methocel® A), methyl hydroxyethyl cellulose (available from DOW Chemical group under the tradename Ceravance®), carboxymethyl cellulose (available from DOW Chemical group under the tradename Walocel®) and hydroxypropyl methyl cellulose (available from DOW Chemical group under the tradename Methocel® F) may be mentioned here.

In some cases, particularly good results have been obtained with Ceravance® 6350, Walocel® CRT 1000, Methocel® F4M and Methocel® A4M, of which Ceravance® 6350 has shown to be particularly effective.

Furthermore, in some cases it has been found advantageous if the viscosity of the celluolose ethers used as component a3) is in the range of from 1000 to 15000 mPa.s, preferably in the range of from 2000 to 10 000 mPa.s, all measured for a 2wt% water based solution of the cellulose ether at 20°C and a shear rate of $8s^{-1}$ with parallel plates. Ceravance® 6350 has a viscosity of 9600 mPa.s, Methocel® F4M of 2756 mPa.s and Methocel A4M® of 3700 mPa.s under these conditions.

In some cases particularly good results have been obtained with Ceravance® 6350 (hydroxyethyl cellulose) in an amount of from 0.3 to 5, in particular of from 0.5 to 3 wt%, based on the weight of halogenated polymer. In some cases it has been observed that the adsorption kinetics start to degrade if the loading of Ceravance® 6350 exceeds 3 wt%, but the optimum upper limit depends to a certain degree on the type of component a3) used.

Polaylkylene oxides and derivatives thereof are also suitable as component a3) in the extrudable compositions used in the method in accordance with the present invention.

Polyalkylene oxides are represented by the general formula $H\text{-}(O\text{-}R)_n\text{-}OH$ wherein R represents an alkylene group preferably having 1 to 20, more preferably 2 to 12 carbon atoms.

The best known polyalkylene oxide is polyethylene oxide (PEO), also commonly refered to as polyethylene glycol (PEG), which is the preferred polyalkylene oxide for the method of the present invention. This is the product of the above general formula in which R is a $-CH_2\text{-}CH_2-$ group.

Polalkylene oxides (in particular polyethylene oxides), like cellulose ethers, offer very good rheological properties and good wet strength to the green monoliths obtained after extrusion. Polyethylene oxide polymers with weight average molecular weights from 300 kDa up to 8000 kDa have shown to be particularly effective for the purpose of the present invention.

Both the water retention and the processability increase with increasing MW. Starting from a molecular weight of 900 kDa, a minimum of 2 wt% of PEO (2 parts PEO for 100 parts of PVDC) is advantageous in order to assure good water retention. At molecular weight of 2 million Dalton or higher good water retention is obtained at PEO loadings of 1 wt% or even lower. For the PEO polymers with molecular weight of 600 and 300 kDa, a minimum of 3-4 and 5 wt% is usually needed to create sufficient water retention.

For the high molecular weight PEO, increasing the PEO content, results in an increased viscosity of the pastes. As a result, the pressure drop during extrusion increases. This has to be kept in mind as there may be a limited pressure stability of the morphology of the halogenated polymer particles. It is generally desirable that the morpholgy of the polymer particles is not changed during the extrusion so that the skilled person will select the appropriate amount of PEO depending on the molecular weight thereof.

Polyvinyl alcohol (PVOH) polymers are another group of processing aids which have been found suitable for the purpose of the present invention.

PVOH polymers are generally obtained by the transesterification (hydrolysis) of a polyvinyl ester based polymer (in particular vinylacetate polymers)

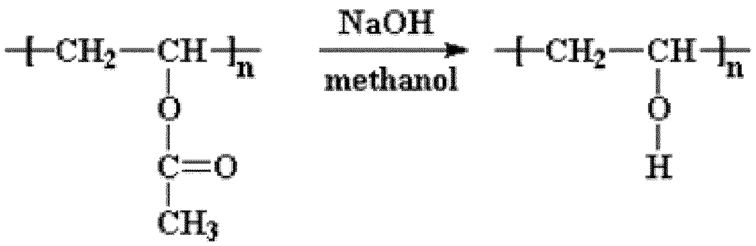


polyvinyl acetate (n>1) polyvinyl alcohol (n>1)

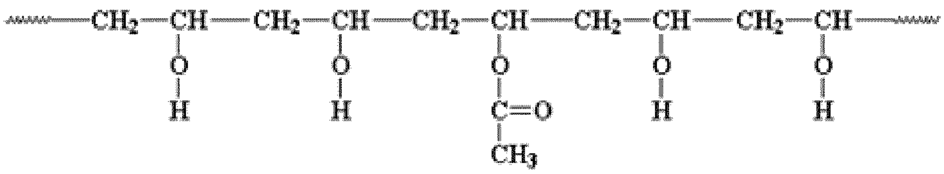

poly(vinyl alcohol-*co*-vinyl acetate)

Polyvinyl alcohol based polymer (PVOH) can be obtained through the transesterification reaction of a polyvinyl ester based polymer (PVE) with alcohol. The PVE is obtained through the polymerization of vinyl ester monomers. Specific examples of the vinyl ester monomers include vinyl acetate, vinyl formate, vinyl propionate, vinyl stearate, the vinyl ester of versatic acid or the vinyl ester of pivalic acid. These esters may be used individually or two or more of them may be used in combination. When consideration is given to availability, the use of vinyl acetate is preferable. The method of polymerizing vinyl ester monomers to be employed in the present invention can be any one of, for example, a solution polymerization method, a bulk polymerization method, a suspension polymerization method, and an emulsion polymerization method.

Simple PVOH polymers are poly(vinyl alcohol-co-vinyl acetate) polymers. Their product properties are determined by the degree of hydrolysis and polymerization/viscosity. Depending on the degree of hydrolysis, more or less vinyl acetate co-monomers are present. Preferred PVOH polymers as processing aids a3) are poly(vinyl alcohol-co-vinyl acetate) polymers with a degree of hydrolysis between 70 and 100, preferable between 75 and 98 and even more preferable between 80 and 98%. The viscosities (which basically is an indication of the molecular weight) is preferably within the ranges given hereinbefore.

PVOH copolymers are generally obtained by the copolymerisation of vinyl ester monomers and ethylenically unsaturated monomers. Specific examples of the ethylenically unsaturated monomers include: olefins such as ethylene, propylene, isobutylene, 1-bute ne, 1-hexene, 1-octene, 1-dodecen, and 1-octadecene; unsaturated acids such as acrylic acid, methacrylic acid, crotonic acid or maleic acid, maleic anhydride, itaconic acid, and itaconic acid anhydride, and salts thereof or monoalkyl or dialkyl esters thereof, nitriles such as acrylonitrile and methacrylonitrile; amides such as

acrylic amide, methacrylic amide, and diacetone acrylamide; and olefin sulfonic acids such as ethylene sulfonic acid, allyl sulfonic acid, and methallyl sulfonic acid, and salts thereof. Further examples of the ethylenically unsaturated monomers include alkyl vinyl ethers, N-acrylamidemethyltrimethylammonium chloride, allyltrimethylammonium chloride, N-vinylpyrrolidone, N-vinyl-ε-caprolactam, N-vinylacetamide, N-vinylformamide, vinyl chloride, vinylidene chloride, polyoxyalkylene (meth)allyl ethers such as polyoxyethylene (meth)allyl ether and polyoxypropylene (meth)allyl ether, polyoxyalkylene (meth)acrylates such as polyoxyethylene (meth)acrylate and polyoxypropylene (meth)acrylate, polyoxyalkylene (meth)acrylamides such as polyoxyethylene (meth)acrylamide and polyoxypropylene (meth)acrylamide, polyoxyethylene (1-(meth)acrylamide-l, l-dimethylpropyl)ester, polyoxyethylene vinyl ether, polyoxypropylene vinyl ether, polyoxyethylene allylamine, polyoxypropylene allylamine, polyoxyethylene vinylamine, and polyoxypropylene vinylamine. These ethylenically unsaturated monomers may be used independently or two or more of them may be used in combination.

Preferably, the amount of ethyleny unsaturated monomers to be used is at least 0. 01 mol % but less than 25 mol %, more preferably at least 0. 02 mol % but less than 20 mol %, on the basis of monomers constituting a PVE. The polymerization degree of the PVE that is used in the present invention is not particularly limited but preferably is in the range of from 100 to 10000, more preferably in the range of at least 120 to 8000.

If a PVOH is obtained through the transesterification reaction of a PVE with alcohol, the saponification degree of the PVOH is preferably 80 mol % to 100 mol %, more preferably 85 mol % to 100 mol %.

Suitable PVOH polymers are also PVOH derivatives. In the context of the invention, PVOH derivatives are obtained through the acetalation of the PVOH polymers as described before. For the acetalation of the polyvinyl alcohols, one or several aldehydes from the group of formaldehyde, acetaldehyde, propanal, butanal, isobutanal, pentanal, hexanal, heptanal, octanal, nonanal, isononanal or decanal can be used. Preferably, butanal is used for the acetalation such that polyvinyl butyral is in turn preferably used in the process in accordance with the present invention:

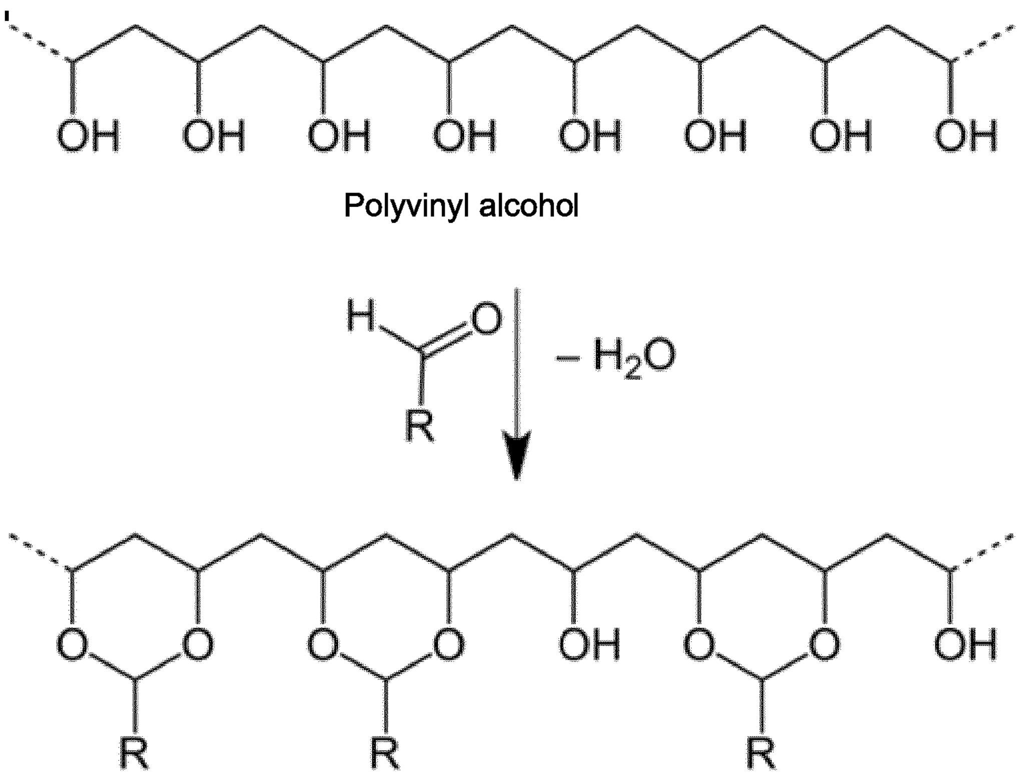


Polyvinyl butyral (R = n-$C_3H_7$)

The acetalized polyvinyl alcohols used according to the present invention can be used in the completely or partially acetylated state. Residual vinyl ester groups (VE) groups, at approximately 1-5% (w/w), and residual vinyl alcohol (VOH) groups, ranging from 10 to 30%, preferentially 12 to 25 (w/w) may be mentioned here. Partially acetalated polyvinyl alcohols with a degree of acetalation of 15 to 80% by weight. The degree of acetalation of the acetalized polyvinyl alcohols used according to the present invention is determined from the difference of 100% minus the polyvinyl ester content minus the polyvinyl alcohol content (in % by weight in each case)

It may be mentioned here that sometimes a random terpolymer poly(vinyl butyral-co-vinyl alcohol-co-vinyl

acetate) as shown below is also refered to as polyvinyl butyral (PVB) :

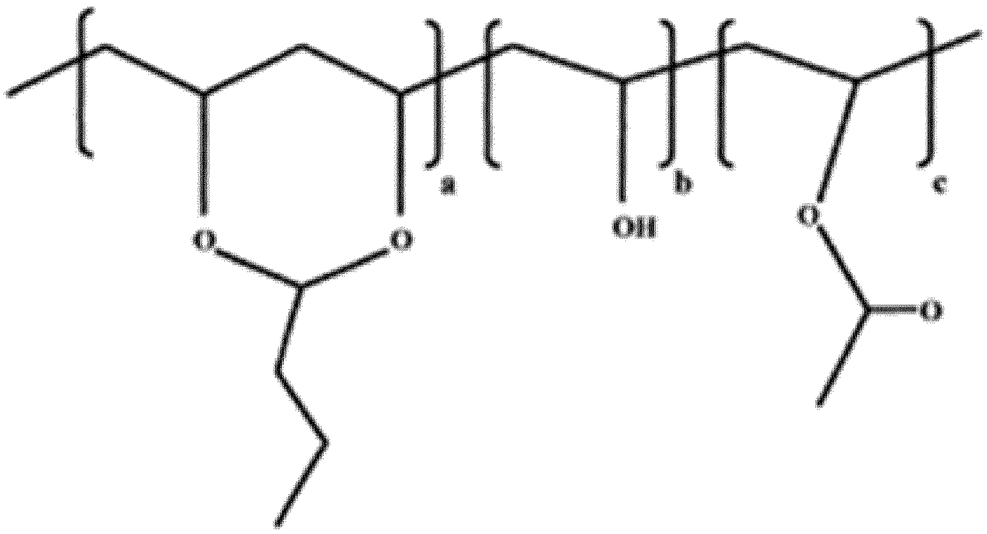

VB VOH VAc

$a,b,c > 1, a \neq b \neq c$

Poly(vinyl butyral-*co*-vinyl alcohol-*co*-vinyl acetate) ("PVB")

This polymer is usually obtained as follows: Subsequent to hydrolysis of polyvinyl acetate to produce polyvinyl alcohol, the latter is reacted with butyraldehyde under acidic conditions. The resultant polymer contains residual vinyl acetate (VAc) groups, at approximately 1-5% (w/w), and residual vinyl alcohol (VOH) groups, ranging from 10 to 30% (w/w), with the remainder of the molecule being composed of vinyl butyral (VB). As noted above, these functionalities are distributed randomly throughout the polymeric backbone.

The acetalized polyvinyl alcohols usually exhibit a polyvinyl alcohol content of 10 to 35% by weight, preferably 11 to 27% by weight, and in particular 16 to 21% by weight, but other vinyl alcohol contents are also possible. The degree of polymerization P of the acetalized polyvinyl alcohols is preferably 100-1000, particularly preferably 100-800, and in particular 100-500. Preferably, the acetalized polyvinyl alcohols used exhibit a viscosity determined according to DIN 53015 (10% solution in ethanol at 20' C. in the Hoeppler viscosimeter) of 2 to 500 mPa.s, particularly preferably of 2 to 200 mPa.s, in particular 2 to 125 mPa.s or 2 to 75 mPa.s. The acetalized polyvinyl alcohols used according to the invention can be used in the completely or partially acetalized state, the use of partially acetalized polyvinyl alcohols with a degree of acetalation of 15 to 80% by weight, in particular 20 to 60% by weight being preferred.

Polyvinyl alcohols and derivatives are also available in a great variety of different grades with different molecular weight and different degrees of hydrolization in the product. The Poval® series of Kuraray Chemicals may be mentioned here as an example, but there are other suitable products commercially available. These grades have a four digit numbering code of the type aa-bb wherein aa gives an indication of the molecular weight and bb of the degree of hydrolization.

As outlined above, the extrudable compositions used in step a) of the process in accordance with the present invention may contain, in addition to the components a1) to a3), further components, such as lubricants, dispersing agents, demolding agents, adhesive agents, thermal stabilizers, plasticizers and fillers. The skilled person will select the appropriate additives taking int account the indivdual case based on his professional knowledge so that no further details are necessary here. Suitable additives have been described in the literature and are available in great variety from a number of commercial sources.

In a preferred embodiment (E), the extrudable compositions of the first step of the method in accordance with the present invention comprise, in addition to the components a1) to a3), at least one lubricant a4).

The nature of the lubricant a4) suitable for the present invention is not particularly limited. The lubricant a4) can be notably chosen from:

- $C_4$-$C_{26}$ hydrocarbons, paraffin oils and paraffin waxes ;
- optionally oxidised polyethylene waxes ;
- $C_4$-$C_{26}$ carboxylic acids, particularly fatty acids of formula $R^0$-COOH wherein $R^0$ is a $C_3$-$C_{25}$ aliphatic group, notably

fatty acid cuts (such as coconut fatty acid cut) and wax acids i.e. $C_{\geq 22}$ fatty acids ;

- $C_4$-$C_{26}$ alcohols, particularly fatty alcohols of formula $R^1$-OH wherein $R^1$ is a $C_4$-$C_{26}$ aliphatic group ;
- $C_8$-$C_{52}$ carboxylic acid esters (other than glycerol), particularly fatty acid esters of formula $R^0$-C(=O)-O-$R^1$ wherein $R^0$ and $R^1$ are as previously defined (commonly referred to as "ester waxes") ;
- glycerol itself and glycerol esters, particularly glycerol fatty acid esters including

(i) monoglycerides of formula (F-1)

$CH_2$ – O – C(=O) – $R^0$
|
CH – OH
|
$CH_2$ – OH (F-1)

wherein R° is as previously defined,
(ii) diglycerides of formula (F-2)

$CH_2$ – O – C(=O) – $R^0$
|
CH – O – C(=O) – $R^{0'}$
|
$CH_2$ – OH (F-2)

wherein $R^0$ is as previously defined and $R^{0'}$ is a $C_3$-$C_{25}$ aliphatic group which is identical to or different from $R^0$,
(iii) triglycerides of formula (F-3)

$CH_2$ – O – C(=O) – $R^0$
|
CH – O – C(=O) – $R^{0'}$
|
$CH_2$ – O – C(=O) – $R^{0''}$ (F-3)

wherein $R^0$ and $R^{0'}$ are as previously defined and $R^{0''}$ is a $C_3$-$C_{25}$ aliphatic group which is identical to or different from $R^0$ and identical to or different from $R^{0'}$, and
(iv) mixtures thereof, for example mixtures of glycerol with one or more fatty acid glycerol esters ;
- $C_4$-$C_{26}$ primary monoamides, particularly fatty acid amides of formula $R^0$-$CONH_2$ wherein $R^0$ is as previously defined ;
- $C_5$-$C_{52}$ secondary monoamides, particularly fatty acid amides of formula $R^0$-CONH-$R^1$ or $R^0$-CONH-$R^2$, wherein $R^0$ and $R^1$ are as previously defined and $R^2$ is $C_1$-$C_3$ alkyl or $C_1$-$C_3$ hydroxyalkyl (such as -$CH_2$-$CH_2$OH) ;
- $C_{10}$-$C_{60}$ diamides, particularly fatty acid diamides of formula $R^0$-CONH-$R^3$-HNOC-$R^{0'}$ wherein $R^0$ and $R^{0'}$, identical to or different from each other, are as previously defined and $R^3$ is a $C_2$-$C_8$ divalent aliphatic group ;
- $C_4$-$C_{26}$ primary amines, particularly fatty amines of formula $R^1$-$NH_2$ wherein $R^1$ is as previously defined ;
- $C_8$-$C_{52}$ secondary amines, particularly fatty amines of formula $R^1$-NH-$R^{1'}$ wherein $R^1$ is as previously defined and $R^{1'}$ is a $C_4$-$C_{26}$ aliphatic group which is identical to or different from $R^1$ ;
- $C_{\geq 4}$ metal carboxylates, particularly alkali metal fatty acid salts of formula $R^0$-COOM wherein $R^0$ is as previously defined and M is an alkali-metal and alkaline-earth metal fatty acid salts of formula $R^0$-COO-M'-OOC-$R^{0'}$ wherein

$R^0$ and $R^{0'}$ are as previously defined and M' is an alkaline earth-metal; the metal of the $C_{\geq 4}$ metal carboxylates can be notably chosen from sodium, potassium, calcium, zinc, magnesium, barium, lead, aluminium and cobalt; and

- mixtures thereof.

Wherever used in any of the above formulae, $R^0$, $R^{0'}$, $R^{0''}$, R1, $R^{1'}$, $R^2$ and $R^3$ can be, independently from each other, linear or branched. In any of the above formulae, $R^0$, $R^{0'}$, $R^{0''}$, $R^1$, $R^{1'}$, $R^2$ and $R^3$ can be, independently from each other, ethylenically monounsaturated or ethylenically polyunsaturated.

Wherever used in any of the above formulae, $R^0$, $R^{0'}$ and $R^{0''}$, independently from each other, comprise preferably at least 7 carbon atoms, more preferably at least 11 carbon atoms ; besides, $R^0$, $R^{0'}$ and $R^{0''}$, independently from each other, may comprise at most 21 carbon atoms or at most 17 carbon atoms.

Wherever used in any of the above formulae, $R^0$, $R^{0'}$ and $R^{0''}$ are often odd numbers.

Wherever used in any of the above formulae, $R^1$ and $R^{1'}$, independently from each other, comprise preferably at least 8 carbon atoms, more preferably at least 12 carbon atoms ; besides, $R^1$ and $R^{1'}$, independently from each other, may comprise at most 22 carbon atoms or at most 18 carbon atoms.

Wherever used in any of the above formulae, $R^1$ and $R^{1'}$ are often even numbers.

The lubricant a4) is preferably chosen from fatty acids of formula $R^0$-COOH, fatty acid esters of formula $R^0$-C(=O)-O-$R^1$, glycerol, monoglycerides of formula (F-1), diglycerides of formula (F-2), triglycerides of formula (F-3), alkali metal fatty acid salts of formula $R^0$-COOM, alkaline-earth metal fatty acid salts of formula $R^0$-COO-M'-OOC-$R^{0'}$, fatty acid amides of formula $R^0$-CONH-$R^1$ or $R^0$-CONH-$R^2$, fatty acid diamides of formula $R^0$-CONH-$R^3$-HNOC-$R^{0'}$ and mixtures thereof, wherein:

- $R^0$, $R^{0'}$, $R^{0''}$, $R^1$, $R^2$, $R^3$, M and M' are as previously defined,
- $R^0$, $R^{0'}$ and $R^{0''}$, independently from each other, comprise preferably from 7 to 21 carbon atoms and more preferably from 11 to 17 carbon atoms, and
- $R^1$ comprises preferably from 8 to 22 carbon atoms, more preferably from 10 to 18 carbon atoms.

The lubricant a4) is more preferably chosen from fatty acids of formula $R^0$-COOH, fatty acid esters of formula $R^0$-C(=O)-O-$R^1$, fatty acid esters of at least one formula chosen from formulae (F-1), (F-2) and (F-3), alkali metal fatty acid salts of formula $R^0$-COOM, alkaline-earth metal fatty acid salts of formula $R^0$-COO-M'-OOC-$R^{0'}$, and mixtures thereof, wherein $R^0$, $R^{0'}$, $R^{0''}$, $R^1$, M and M' are as previously defined.

In accordance with embodiment (E), the amount of the lubricant a4), based on the total weight of the composition comprising the halogenated polymer, the solvent, the processing aid and the lubricant, ranges generally from 0.01 % to 15 %. It is preferably of at least 0.05 % and more preferably of at least 0.10 %. Besides, it is preferably of at most 10 % and more preferably of at most 5%. Excellent results were obtained when the amount of the lubricant a4) ranged from 0.20 % to 3 %.

In step b) of the method in accordance with the present invention, the composition obtained in step a) and described herein before, is extruded through a die, preferably a die giving the wet green body obtained after the extrusion step already the shape and morphology of the final product so that after drying the green body and pyrolyzing the polymer, the final desired morphology is obtained without the need of further shaping or processing steps such as drilling or the like. This facilitates the process and is also advantageous for performance and the commercial feasibility of the process.

Extrusion processes for the extrusion of ceramic materials are known to the skilled person and have been described in the literature.

Extrusion can be effected for example by a hydraulic ram extrusion process or a single or twin screw extruder with a die assembly suitable to achieve the desired shape.

In some cases it has been found advantageous to use a so called clay-extruder which is designed for the extrusion of ceramic pastes and which is known to the skilled person.

The extrusion is preferably carried out as a so called cold-extrusion, i.e. at a temperature of less than 60°C, preferably in the range of from 20 to 40°C. The skilled person will select the optimum temperature taking into account the pressure drop (which increases as the the extrusion temperature is lowered), melting temperature and softening point of the polymer and gellification temperature of the processing aids. As it is of prime importance to maintain the macropore structure of the carbon precursor a1), generally, he will try to avoid a pressure drop bearing the risk of damaging the morphology of the polymer particles used in the extrudable paste. This may mean to increase the extrusion temperature to a certain extent.

After step b) an extrudate (the so called wet green body) is obtained, preferably reflecting the morphology and shape of the intended final product already.

The wet green body obtained after the extrusion in step b) in the method of the present invention is another embodiment of the present invention.

The wet green body obtained after the extrusion in step b) preferably has the form of a strand, a fibre, a tube, a block, a brick, a bead, a disc, a laminate, a cylindrical form, a pellet or a bead or the form of a monolith, preferably a monolith with a honeycomb structure.

The wet green body obtained after step b) contains a certain amount of solvent a2) which is necessary to produce an extrudable paste when providing the compositions for extrusion in step a). More precisely, like the extrudable composition used in step a), the wet green body obtained after step b) generally comprises the carbon precursor a1), the solvent a2) and from 0.1 to 8 wt%, based on the weight of the carbon precursor a1), of the processing aid a3).

The wet green body is dried in step c) of the method of the present invention. The drying step primarily serves the purpose of removing the solvent. This allows manipulation or transport of the product with better stability and avoids an influence of the solvent during the pyrolysis step. This has been found to be advantageous as a direct pyrolysis of the wet green body at high temperatures has some disadvantages concerning the morphology and adsorptive capacity of the final product. The drying step may be carried out at the site where the extrusion was effected or the wet green body may be transferred to another location for drying or the drying may be a combination of both these possibilities, i.e. a first drying step at the site of the extrusion and a second drying step at another location which might be the location of pyrolysis or another intermediate location the product is transferred to. The good stability of the wet green body obtained in accordance with the method of the invention is advantageous for an eventually desired transport to another location in the wet state.

The drying step c) is preferably carried out at a temperature in the range of from room temperature to 140°C, preferably of from room temperature to 100°C for a period of from 10 minutes to 24 hours, preferably of from 20 minutes to 12 hours. The drying is usually carried out in an unmodified atmosphere. Alternatively, the drying is performed in an atmosphere with controlled and/or changing relative humidity. Reduced pressure can be applied, if considered advantageous.

The shaped green body obtained after step c) in the method of the present invention is another embodiment of the present invention.

While the shaped green body obtained after step c) might sometimes still contain a substantial amount of residual solvent a2), it is preferably substantially free, essentially free or even completely free of solvent a2).

Irrespectively thereof, like the precursor material, the shaped green body obtained after step c) generally comprises the carbon precursor a1) and from 0.1 to 8 wt%, based on the weight of the carbon precursor a1), of the processing aid a3).

The shaped green body obtained after the drying in step c) has preferably has the form of a strand, a fibre, a tube, a block, a brick, a bead, a disc, a laminate, a cylindrical form, a pellet or a bead or the form of a monolith, preferably a monolith with a honeycomb structure.

In step d) of the method in accordance with the present invention, an adsorptive carbonaceous shaped body is obtained by pyrolysis of the product obtained in step c). For this purpose, the product obtained in step c) is heated to a temperature above 140°C (any temperature below 140°C for the propose of the present invention is considered to be part of the drying step c), preferably under inert gas flow, causing the pyrolysis of the halogenated polymer.

It has been found advantageous in some cases for the method of the present invention, if the pyrolysis is carried out in several steps as follows.

After drying, the temperature is brought up to a temperature above 140°C, preferably to a temperature$T_2$ strictly above $T_{2,min} = T_m$ - 50°C and strictly below $T_{2,max} = T_m$, wherein $T_m$ is the melting point of the halogenated polymer.

In the case of vinylidene chloride homopolymer, the temperature $T_2$ is generally of at least 150°C, preferably of at least 155°C, more preferably of at least 160°C. Besides, the temperature $T_2$ is generally of at most 210°C, preferably of at most 200°C, more preferably of at most 190°C, even more preferably of at most 180°C.

The shaped bodies are maintained at the temperature $T_2$, preferably under inert gas flow, to cause the pyrolysis of the halogenated polymer. The inert gas flow usually comprises argon, helium, nitrogen or mixture thereof.

As $T_{2,max}$ is strictly below the melting point ($T_m$) of the vinylidene chloride polymer, the dehydrohalogenation occurs without observing the collapsing neither of the structure of the shaped body, nor of the macroporosity of the particle. Actually, the exposure of the shaped body at this temperature causes the formation of an infusible char which is involved in further pyrolysis at higher temperature.

For final carbonization, the shaped bodies are thereafter brought up to a temperature $T_3$ strictly above $T_{3,min} = T_m$ and strictly below $T_{3,max}$ = 1300°C, wherein $T_m$ is as previously defined.

The temperature $T_3$ is generally of at least 400°C, preferably of at least 450 C, more preferably of at least 500°C. Besides, the temperature $T_3$ is generally of at most 1300°C, preferably of at most 1 100°C, more preferably of at most 1000°C, even more preferably of at most 900°C.

The shaped bodies are maintained at the temperature $T_3$ under inert gas flow, to cause the pyrolysis of the halogenated polymer, thereby obtaining the desired final shaped body.

In another embodiment, causing the pyrolysis of the vinylidene chloride polymer is conducted stepwise at different increasing temperatures $\theta_1$ ... to $\theta_n$ wherein $\theta_1 < ... < \theta_n$ and $2 \leq n \leq 6$. In a preferred embodiment, n = 3.

Thus, the product obtained in step c) is introduced into a furnace and, the temperature of the shaped body is increased up to a temperature $\theta_1$ at a heating rate $H_1$ and is held at this temperature, under inert gas flow, for duration $D_1$. Afterwards, the temperature is optionally raised up from $\theta_1$ to the successive temperatures $\theta_n$ at the successive heating rates $H_n$ and is maintained at these temperatures, under inert gas flow, for successive durations $D_n$.

When the halogenated polymer is vinylidene chloride homopolymer, $\theta_1$ generally ranges from 140°C to 190°C, $\theta_n$ generally ranges from 200°C to 1300°C. Preferably, $\theta_1$ ranges from 140°C to 170°C and $\theta_n$ ranges from 250°C to 900°C.

The heating rate $H_1$ generally ranges from 1°C/min to 20°C/min. The heating rate $H_n$ generally ranges from 0.1°C/min to 20°C/min

The duration $D_1$ generally does not exceed 72 h, preferably does not exceed 48 h, more preferably does not exceed 24 h and even more preferably does not exceed 20h. The duration $D_1$ is generally at least 0.1 h, preferably at least 0.2 h, more preferably at least 0.5 h. The duration $D_n$ generally does not exceed 30 h, preferably does not exceed 25 h, more preferably does not exceed 20 h. The duration $D_n$ is generally at least 0.1 h, preferably at least 0.2 h, more preferably at least 0.5 h.

The product obtained after step d) of the method in accordance with the present invention is an adsorptive carbonaceous shaped body which may be used for a variety of purposes.

The adsorptive carbonaceous shaped body obtained with the method in accordance with the present invention advantageously presents an intra-particle macroporosity and an inter-particles macroporosity.

Mercury porosimetry is used to determine macroporous characteristics of the shaped bodies. For this purpose, monoliths are broken down into pieces of 1 to 2 cm in order for them to fit in the dilatometers.

Mercury porosity measurements as given later in the working examples have been performed with a Micromeritics Autopore 9520 porosimeter n°10 as follows:
Measurement starts at vacuum up to 2 bar, followed by measurement from 1 to 2000 bar. Sample size (about 500 - 700 mg) of product was selected considering the measurement range of the dilatometers and in order to consume 30 - 50 % of the capillary volume. Type CD3P 35 ml volume powder dilatometers are used (#70, 71 and 180). Samples were dried at 150°C in vacuum, then quickly transferred to the dilatometers, closed and vacuum pulled until less than 1 mbar for 1h. Calculations with contact angle 130° and surface tension of 485 Dyne/cm, Hg density temperature dependent (around 25°C).

Shaped bodies were broken down into pieces of 1 to 2 cm in order for them to fit in the penetometers.

From the measured curves, the total, the extra-grain and intra-grain pore volumes are calculated. The curve showing the incremental intrusion volume in function of the pore size is used to calculate the extra-grain and intra-grain mean pore size

Depending on the way the halogenated polymer particles comprising at least a halogenated polymer have been manufactured, i.e. by suspension polymerization or by cryogenic grinding of halogenated polymer particles, some features concerning macroporosity of the resulting carbonaceous shaped bodies may be slightly different.

From the measured curves, the intra-particle and the inter-particles pore volumes are calculated from the total pore volume. The curve showing the incremental intrusion volume in function of the pore size is used to calculate the intra-particle and the inter-particles mean pore size.

The inter-particles macropore volume of M, measured by Hg porosity, is generally of at least 0.10 ml/g, advantageously at least 0.20 ml/g, more advantageously at least 0.25 ml/g and even more advantageously at least 0.35 ml/g. Besides, the inter-particles macropore volume of preferably does not exceed 0.9 ml/g.

The cumulated intra and inter-particle macropore volumes or total macropore volume, measured by Hg porosity is preferably of at least 0.12 ml/g, advantageously at least 0.20 ml/g, more advantageously at least 0.35 ml/g and even more advantageously at least 0.40 ml/g. Besides, the total macropore volume preferably does not exceed 1.30 ml/g.

The intra-particle macropores have preferably an average diameter, measured by Hg porosity, of generally at least 0.4 $\mu$m, advantageously at least 0.8 $\mu$m and more advantageously at least 1 $\mu$m. Besides, the intra-particle macropores have an average diameter which preferably does not exceed 5 $\mu$m.

The inter-particle macropores have an average diameter, measured by Hg porosity, of preferably at least 5 $\mu$m, advantageously at least 9 $\mu$m and more advantageously at least 12 $\mu$m. Besides, the inter-particle macropores preferably have an average diameter which preferably does not exceed 50 $\mu$m, advantageously does not exceed 45 $\mu$m and more advantageously does not exceed 40 $\mu$m.

When the polymer particles have been subjected to cryogenic freezing followed by grinding of larger particles, the intra-particle macropores and the inter-particle macropores of M may be difficult to be distinguished by Hg porosimetry probably because they have similar average diameters.

In such case, the macropores have preferably an average diameter, measured by Hg porosity, of at least 0.4 $\mu$m, advantageously of at least 0.6 $\mu$m and more advantageously of at least 0.8 $\mu$m. Besides, the macropores have an average diameter which preferably does not exceed 8 $\mu$m.

Moreover, it is possible to measure the cumulated intra and inter-particle macropore volumes which is the total macropore volume. The total macropore volume is preferably of at least 0.12 ml/g, advantageously of at least 0.20 ml/g

and more advantageously of at least 0.30 ml/g. Besides, the total macropore volume preferably does not exceed 1.3 ml/g.

The adsorptive carbonaceous shaped body obtained after step d) preferably has a BET surface area ($S_{BET}$) of at least 800 $m^2/g$, more preferably of at least 900 $m^2/g$ and even more preferably of at least 1000 $m^2/g$ and has preferably a micropore volume, measured by $N_2$ adsorption, of at least 0.30 $cm^3/g$, more preferably of at least 0.35 $cm^3/g$ and even more preferably of at least 0.38 $cm^3/g$.

Preferably, the shaped body obtained after step d) has a honeycomb structure.

Generally, the honeycomb structure of a respective product after step d) according to the invention has a wall thickness below 1000 $\mu$m, preferably below 750 $\mu$m and more preferably below 500 $\mu$m.

This honeycomb structure, independently from the way that it is manufactured, is another object of the present invention and may be characterized in that it has a particular number of cells per square inch unit (cpsi).

Generally, such honeycomb structure according to the invention has at least 50 cpsi (cells per square inch), preferably at least 100 cpsi, more preferably at least 150 cpsi and even more preferably at least 200 cpsi. Besides, such honeycomb structure according to the invention has advantageously at most 1200 cpsi, more advantageously at most 800 cpsi and even more advantageously at most 600 cpsi.

The shaped body obtained after step d) may also have channels with a square, diamond, or circular cross section instead of the clasical hexagonal honeycomb structure.

The carbonaceous honeycomb monoliths according to the invention have a selective $CO_2$ capacity $Q_{CO2}$ generally of at least 15 mg/g, advantageously of at least 20 mg/g, more advantageously of at least 25 mg/g and even more advantageously of at least 27 mg/g.

The adsorptive carbonaceous shaped bodies obtained according to the invention may be used for any gas purifications. For example, $CO_2$ may be extracted and purified from flue gas, air or from a gas composition comprising natural and bio gas. The porous carbonaceous monolith structures may be also used for natural and bio gas purification. They may also be used for air and water treatment applications. Finally, they may be used for catalysis applications. However, application fields are not limited to these examples.

The dynamic and selective $CO_2$ capacity of the adsorptive shaped bodies and porous carbon particles may be determined by experiments wherein a gas stream containing $CO_2$ and $N_2$ (15/85 by volume) is fed to a sample at constant flow rate. The flow rates of all the pure gasses are regulated by mass flow controllers. The sample outlet is connected to a mass spectrometer, measuring on-line the Ar and $CO_2$ concentration over the whole duration of the experiment. Prior to each experiment, the samples are activated in a pure $N_2$ stream (equal flow rate of the separation experiment) at ambient temperature or at 120°C. The particles are dried overnight under vacuum at 110°C before installation in the experimental setup. All separation experiments are performed at room temperature (about 21°C) and total flow rates of 50 - 500 Nml/min. In order to determine the system dead time, a tracer gas steam (5 Nml/min of Ar), is added to the $CO_2/N_2$ gas steam. Experiments on particles are performed using a column with a length of about 10 cm and an internal diameter of 0.6 cm, packed with 0.5 to 0.9 g of adsorbent.

The total selective $CO_2$ capacity, $Q_{CO2}$, is calculated by integration of the experimental curves

$$Q_{co_2} = \frac{1}{M_{sample}} \int_{t=0}^{tend} (q_0' - q_t')\, dt$$

with $q_0$' and qt' being respectively the mass flow at the column inlet at time zero and column outlet at time t. Time zero is experimentally determined by injecting a non-adsorbing tracer flow (Ar) in the feed stream. Time zero is chosen as the time at which the Ar experimental curve reaches the half of its maximum height.

The carbonaceous shaped bodies obtained with the method according to the invention have a selective $CO_2$ capacity $Q_{CO2}$ generally of at least 20 mg/g, advantageously of at least 23 mg/g and more advantageously of at least 25 mg/g.

The dynamic/exploitable selective $CO_2$ adsorption capacity (selective $CO_2$ capacity at breakthrough), $Q_{CO2,\ int}$, is calculated with following equation:

$$Q_{CO2,int} = \frac{1}{M_{sample}}\ q_0' \ (t_{int} - t_0)$$

with $t_{int}$ being the time at which the $CO_2$ starts to elute from the column, estimated from the asymptote of the $CO_2$ breakthrough curve, calculated using:

$$t_{int} = \frac{-intercept}{slope}$$

The intercept and the slope are determined between $t_{25}$ and $t_{75}$, i.e. the time at which the $CO_2$ breakthrough curve reaches respectively 25% and 75% of its final value.

The % of exploitation, a measurement of the kinetic performance, of a monolith at a certain flow rate (expressed in m/s), is defined as the dynamic selective $CO_2$ adsorption capacity, at that particular flow rate, divided by the total selective $CO_2$ capacity, measured on the porous carbon particles obtained by the pyrolysis of the carbon precursor particles, used for the formation of that monolith.

Examples

Shaped bodies were produced by cold extrusion as follows:
PVDC resin shaped bodies were produced from a paste containing i) PVDC resin (PVDC1, PVDC2, PVDC3 and PVDC6, see later), ii) an organic wet binder/processing aid and iii) the correct amount of water to obtain an extrudable paste. The pastes were produced by adding water to a dry blend of PVDC resin and processing aid followed by mixing with or a planetary mixer (speedmixer DAC 400.1 FVZ; 2 min @ 2000 rpm) or a planetary kneader equipped with a dough hook (Kenwood kMix KMX50) or a combination of an intensive mixer (Eirich R 05/T) and a kneader with intermeshing DUPLEX kneading blades (IKA HKD 10 kneader).

The pastes were then transferred to a manual clay extruder (Makin clay extruder) and hollow fibers, laminates or grooved laminates were extruded. The produced shaped bodies were dried overnight in a ventilated oven at 50°C.

Direct extrusion of honeycomb green monoliths was performed with a custom ram extrusion equipment. Honeycomb dies, supplied by ZMB Braun, were mounted on a pneumatic syringe pump (Isco 500D) and the paste was pressed through the die at constant flow rate. Direct extrusion of honeycomb green monoliths was also performed with a single screw extruder (ECT-Kema PZVQRG-8A with 80 mm diameter) and honeycomb dies, supplied by ZMB Braun.

A 4-step temperature program was applied for the production of porous carbon shaped bodies. Dried green bodies were placed on top of a quartz plate inside a quartz tube, fitted in a 3 zone horizontal tubular furnace (carbolite HZS 12/900).

The temperature was ramped from room temperature to 130°C at a rate of 10°C/min and was held at that temperature for 1 h. The temperature was further increased with a heating rate of 1°C/min to an intermediate temperature (160°C) and held at this temperature for 17 - 20 h. The temperature was further increased to 300°C with a heating rate of 1°C/min and held at this temperature for 1 h. In the final step, the temperature was increased to 600°C at a heating rate of 2°C/min and held at this temperature for 1 h.

For the PVDC2 and the PVDC3 grades, the intermediate temperature was reduced to 150°C.

PVDC resins used were the following:

PVDC1: Copolymer of vinylidene chloride and vinyl chloride (monomer ratio 83:17), containing 2,5 wt% epoxidized soybean oil and 2.7 wt% of dibutyl sebacate, having a melting temperature of 169°C, a $D_{50}$ of 220 μm, a span of 0.78 (all parameters determined as previously described. Selective $CO_2$ capacity ($Q_{CO2}$) was 27.5 mg/ and $S_{BET}$ was 877 $m^2$/g/ micropore volume was 0.34 ml/g

PVDC2: A copolymer of vinylidene chloride and methyl acrylate (monomer ratio 92:8) ), containing 1,8 wt% epoxidized soybean oil, having a melting temperature of 158°C, a $D_{50}$ of 201 μm and a span of 0.9 (all parameters determined as previously described. PVDC3 was PVDC2 subjected to cryogenic milling as previously described before use. $Q_{CO2}$ was 28.9 mg/g, $S_{BET}$ was 955 $m^2$/g, and micropore volume was 0.37 ml/g

PVDC3: PVDC2 subjected to cryogenic milling as previously described, yielding powders with $D_{50}$ of 55 μm and a span of 1.45. $Q_{CO2}$ was 29.4 mg/g, $S_{BET}$ was 937 $m^2$/g, and micropore volume was 0.37 ml/g

PVDC4: PVDC2 subjected to cryogenic milling as previously described, yielding powders with $D_{50}$ of 33 μm and a span of 1.80.

PVDC5: PVDC2 subjected to cryogenic milling as previously described, yielding powders with $D_{50}$ of 62 μm and a span of 1.97.

PVDC6: Vinylidene chloride homopolymer was produced in a suspension process. A 65-liter, glassed line autoclave was loaded with 36.9 kg of demineralized water and mechanical stirring was started at 130 rpm (revolutions per minute). Then, 230 g of dimyristyl peroxydicarbonate (DPDC) and 4100 cm3 of a 10 g/L aqueous solution of methyl hydroxypropyl cellulose (MHPC) as suspending agent were introduced under stirring. Afterwards, mechanical stirring was stopped and the reactor was put under vacuum. Then, 21500 g of vinylidene chloride (VDC) were loaded in the reactor and mechanical stirring was started at 235 rpm. The autoclave was then heated at 50°C and the polymerization was allowed to proceed for 9 hours. Conversion of the monomer to polymer was approximately 90%. The residual monomer was removed by stripping of the formed slurry. For this purpose, the stripping was carried out under vacuum (-0.5 bar) at a temperature of 80°C for 8 hours. The autoclave was then cooled and drained. A slurry purified of the residual monomers was recovered, washed, filtered and dried in a fluidized bed. The resultant product (PVDC6), was a powder, comprising particles having a mean diameter $D_{50}$ of 123 μm and a span of 1.04. The resultant product had a melt temperature of 167.8°C, a porosity measured by absorption of a DINP of 15.5%. The total pore volume and the average pore size, both measured by Hg porosity, were respectively 0.20 $cm^3/g$ (0.26 $cm^3/g$ for carbon) and 1.90 μm (1.75 μm for carbon). 90 vol. % of the macropores of particles (PVDC6) had a diameter, measured by Hg porosimetry, ranging from 0.01 μm to 10 μm. The powder had 14 ppm (part per million) residual vinylidene chloride. $Q_{CO2}$ was 40.4 mg/g, $S_{BET}$ was 1044 $m^2/g$, and micropore volume was 0.40 ml/g.

The specific surface area ($S_{BET}$) was determined according to the ISO 9277:2010 norm (Determination of the specific surface area of solids by gas adsorption - BET method - Annex C: Surface area of microporous materials). The relative pressure, $P/P_0$, region in which the BET model has been applied was chosen in such a way that the C constant has a positive value.

The dynamic and total selective $CO_2$ capacity of porous carbon microbeads and monoliths were determined by breakthrough experiments. A gas stream containing $CO_2$ and $N_2$(85/15 by volume) is fed to the sample at constant flow rate. The flow rates of all the pure gasses were regulated by mass flow controllers. The sample outlet is connected to a mass spectrometer, measuring *on-line* the Ar and $CO_2$ concentration over the whole duration of the experiment. Prior to each experiment, the samples were activated in a pure $N_2$ stream (equal flow rate of the separation experiment) at a temperature of 120°C. All separation experiments were performed at room temperature (about 21°C) and total flow rates of 50 Nml/min for the microbeads and 100 - 500 Nml/min for the honeycomb monoliths. In order to determine the system dead time, a tracer gas steam (5 Nml/min of Ar for the monoliths, 1 Nml/min for the microbeads) was added to the $CO_2/N_2$ gas steam.

Breakthrough experiments on microbeads were performed using a column with a length of about 10 cm and an internal diameter of 0.6 cm, packed with 0.5 to 0.9 g adsorbent. Breakthrough experiments on monoliths were performed on monoliths with a length of 8 - 16 cm and a cross section of about 1 $cm^2$. Monoliths were directly connected to the in- and outlet tubing.

The total selective $CO_2$ capacity, $Q_{CO2,\ total}$, was calculated by integration of the experimental breakthrough curves.

Examples 1 to 6 - Polyvinyl alcohol as processing aid

Porous carbon hollow fibers were produced as followed. Carbon precursor (PVDC3) was mixed (with a planetary mixer (speedmixer DAC 400.1 FVZ; 2 min @ 2000 rpm) with PVOH solution in order to obtain an extrudable paste. Table 1 shows the composition of the extrudable pastes The following Polyvinyl alcohol (PVOH) grades were used:

Poval® 56-98: Polyvinyl alcohol with a degree of hydrolysis of 98 wt% and intermediate molecular weight
Poval® 95-88: Polyvinyl alcohol having a degree of hydrolisation of 88% and a high molecular weight
Exceval® RS-2117: copolymer of PVOH and ethylene with high degree of hydrolysation (98%) and medium molecular weight.

All polyvinyl alcohol products were obtained from Kuraray.

Table 1

| Example | PVDC3 resin (g) | PVOH in solution wt% | Quantity PVOH solution ml | PVOH content in extruded green body wt% | Water content wt% |
|---|---|---|---|---|---|
| 1 | 10 | 10 (56-98) | 6 | 5,66 | 33.8 |
| 2 | 10 | 15 (56-98) | 6 | 8,26 | 31.9 |
| 3 | 10 | 10 (95-88) | 5 | 4,76 | 30.0 |
| 4 | 10 | 15 (95-88) | 6 | 8,26 | 31.9 |
| 5 | 10 | 10 (RS2117) | 5 | 4,76 | 30.0 |
| 6 | 10 | 15 (RS2117) | 6 | 8,26 | 31.9 |

The paste was then transferred to a manual clay extruder (Makin clay extruder) and hollow fibers with internal (ID) and external diameter (OD) of 4 mm and 5.5 mm respectively were extruded. The extrudates were dried overnight in a ventilated oven at 50°C. The dried hollow fibers were pyrolysed according to the 4 step procedure described earlier. As such porous carbon hollow fibers with 2.85 mm ID and 3.9 mm OD were produced. Table 2 tabulates the processability of the pastes as well as the properties of the obtained products.

Table 2

| Example | BET $m^2/g$ | Processability Extrusion | Cohesion after drying | Cohesion after pyrolysis |
|---|---|---|---|---|
| 1 | 875 | + | + | + |
| 2 | 847 | + | + | + |
| 3 | 906 | ++ | + | + |
| 4 | 829 | + | ++ | + |
| 5 | 847 | + | + | + |
| 6 | 878 | +/- | + | + |

In Table 2 (and the subsequent tables, where applicable) the indices have the following meaning:

Extrusion:

+ extrudable with syringe and clay extruder, Slight blistering during extrusion
++ extrudable with syringe and clay extruder. Perfect extrudate (hollow fiber)

After drying and pyrolysis:

- No mechanical resistance. Falls apart into powder as soon as manipulated
+/- Some mechanical resistance. When broken forms small and fragile pieces
+ Hollow fiber has relatively good mechanical properties. When broken, small pieces with good mechanical properties are formed
++ Good mechanical properties. When broken large pieces with good mechanical properties are formed

The viscosity of the PVOH grades (determined as described before) was 48,5 mPa.s for Poval® 56-98, 69,9 MPa.s for Poval® 95-88 and 27.1 mPa.s for Exceval® RS 2117. The results show that superior results are obtained if the viscosity of the PVOH grade exceeds 40 mPa.s. PVOH grades with viscosities below 20 mPa.s (not shown in the table) did not yield properly extrudable compositions unless used in amounts significantly exceeding 10 wt%, which is detrimental for the adsorptive properties of the final product.

It may be generally noted that the final shaped bodies with the PVOH processing aids were not as good as those produced with polyethylene oxide or polysaccharides (see later). Furthermore, apparently the alcohol group of the PVOH binder system interferes to a certain degree with the cross-linking reaction during pyrolysis. As a result, the mechanical properties of the porous carbon shaped bodies were not at the level of those of porous carbon shaped bodies obtained with polysaccharides and polyethylene oxide as processing aids. Nevertheless, the products are still satisfactory

Examples 7 to 21 - Cellulose ethers as processing aid

PVDC resin shaped bodies were produced from a paste containing i) PVDC resin (PVDC2, PVDC3 and PVDC6, see later), ii) a cellulose ether processing aid and iii) the correct amount of water to obtain an extrudable paste. The pastes were produced by adding water to a dry blend of PVDC resin and processing aid followed by mixing with or a planetary mixer (speedmixer DAC 400.1 FVZ; 2 min @ 2000 rpm) The following grades of cellulose ethers were used:

Ceravance 6350: Methyl hydroxyl ethyl cellulose, obtained from DOW Chemical Corp.
Walocel RT 1000: Carboxymethyl cellulose obtained form DOW Chemical Corp.
Methocel 4FM: Hydroxypropyl methyl cellulose obtained from DOW Chemical Corp.

Table 3 shows the compositions prepared.

Table 3

| Example | PVDC grade (g) | Cellulose ether content in extruded green body wt% | Water content wt% |
|---|---|---|---|
| 7 | 10 PVDC2 | 5 Ceravance® 6350 | 33.4 |
| 8 | 4 PVDC3 +6 PVDC2 | 5 Ceravance® 6350 | 37.5 |
| 9 | 10 PVDC3 | 5 Ceravance® 6350 | 33.1 |
| 10 | 10 PVDC3 | 4 Ceravance® 6350 | 33.3 |
| 11 | 10 PVDC3 | 3 Ceravance® 6350 | 33.6 |
| 12 | 10 PVDC3 | 2 Ceravance® 6350 | 33.8 |
| 13 | 10 PVDC3 | 1 Ceravance® 6350 | 34.0 |
| 14 | 10 PVDC3 | 0.5 Ceravance® 6350 | 34.1 |
| 15 | 10 PVDC6 | 1 Ceravance® 6350 | 35.7 |
| 16 | 10 PVDC6 | 5.2 Ceravance® 6350 | 34.7 |
| 17 | 10 PVDC3 | 2.1 Walocel® RT1000 | 39.3 |
| 18 | 10 PVDC3 | 3 Walocel® RT1000 | 39.0 |
| 19 | 10 PVDC3 | 5,2 Walocel® RT1000 | 38.6 |
| 20 | 10 PVDC3 | 2.1 Methocel® F4M | 34.6 |

The paste was transferred to a manual clay extruder (Makin clay extruder) and hollow fibers with internal (ID) and external diameter (OD) of 4 mm and 5.5 mm respectively were extruded. The extrudates were dried overnight in a ventilated oven at 50°C. The dried hollow fibers were pyrolysed according to the 4 step procedure described earlier. As such Porous carbon hollow fibers with 2.85 mm ID and 3.9 mm OD were produced. Table 4 tabulates the processability of the pastes as well as the properties of the obtained products.

Table 4

| Example | BET $m^2$/g) | Processability Extrusion | Cohesion after drying | Cohesion after pyrolysis |
|---|---|---|---|---|
| 7 | 909 | ++ | ++ | ++ |
| 8 | 916 | ++ | ++ | ++ |
| 9 | 904 | ++ | ++ | ++ |
| 10 | 913 | ++ | ++ | ++ |
| 11 | 918 | ++ | | ++ |
| 12 | 927 | ++ | ++ | ++ |
| 13 | 947 | ++ | ++ | ++ |
| 14 | 945 | ++ | + | ++ |
| 15 | 1011 | + | + | - |
| 16 | 1065 | + | ++ | + |
| 17 | 929 | +/- | ++ | ++ |
| 18 | 1034 | ++ | ++ | ++ |
| 19 | 893 | ++ | ++ | ++ |
| 20 | 1009 | ++ | ++ | ++ |

The results in Table 4 show that cellulose ethers are very good processing aids in the process of the present invention, even in very low concentrations. The products obtained had excellent mechanical properties.

All pastes behaved as pseudoplastic (shear thinning) liquids and had similar rheological properties. The pastes had typical shear thinning behaviour with viscosities dropping from about 1000 Pas to 10 Pas at shear rates between 10 and 4000 1/s respectively. Only at low shear rates (between 10 and 100 1/s) a small drop in viscosity with Ceravance® loading was observed. Extrusion of the paste during capillary rheology experiments was performed at speeds between 0.1 and 50 cm/s. At all speeds, the paste has proven to be stable. No deformulation was observed and good quality strands were produced. In order to reach these speeds, pressure drops between 30 and 45 bar were recorded. These pressures are compatible with the resin. PVDC resins maintain their macropore structure up to pressures of 40-100 bar (depending on the composition). This can be seen from Table 5 where the macroporosity of the resin particles is compared with the product obtained after extrusion.

Table 5

| Example | Macroporosity | | | | |
|---|---|---|---|---|---|
| | Pore volume (ml/g) | | | Pore size (μm) | |
| | Extra grain | Intra grain | total | Extra grain | Intra grain |
| PVDC3 | 0.81 | | | 8 | |
| Example 10 | 0.5 | | 0.558 | 2.5 | |
| Example 13 | 0.56 | | 0.646 | 3 | |

Examples 21 to 24 - Assembled honeycomb monoliths - Impact of processing aid content on kinetic performance

Porous carbon honeycomb monoliths were assembled from extruded 3D shapes, produced from a paste containing i) PVDC resin (PVDC3 as described before), ii) a polysaccharide processing aid (Ceravance® 6350 as described before) at different loadings in order to evaluate the effect of processing aid type and loading on the performance (total and exploitable selective $CO_2$ capacity) and iii) the correct amount of water. Individual levels of the honeycomb monoliths were extruded using the Makin's clay extruder and a home-made die with wall thickness of 0.8 mm and open cell structure of about 1.2 mm, containing 7 walls and 6 open cells. The extruded shaped bodies were dried overnight at 50°C in a ventilated oven and pyrolysed in a 4 step program as described before, yielding porous carbon shaped bodies with the shape of 1 level of a honeycomb monolith. Several of these porous carbon shaped bodies were superimposed and assembled (wrapped) with a heat shrink tubing, producing a honeycomb monolith with square shape channels. Table 6 shows the composition of the extrudable pastes and some characteristic dimensions of the extruded monoliths. Monoliths were cut at a length of 85 - 120 mm.

Table 6

| Example | Amt, Ceravance 6350 wt%) | Wall thickness mm | Levels |
|---|---|---|---|
| 21 | 1 | 0,570 | 5 |
| 22 | 5 | 0,571 | 6 |
| 23 | 2 | 0,561 | 6 |
| 24 | 3 | 0,604 | 6 |

The honeycomb monoliths all had square shaped channel of about 0.8 mm.

Breakthrough experiments were performed at a flow rate of 100 - 500 ml/min, corresponding to a gas velocity of 0.05 - 0.5 m/s and a monolith contact time of 0.2 - 1 s, different $CO_2$ feed concentrations and at room temperature. The total and exploitable selective $CO_2$ adsorption capacity of the experiments performed at 200 ml/min (0.13 - 0.19 m/s) are tabulated in Table 7

Table 7 shows the specific surface area ($S_{BET}$) and selective carbon dioxide adsorption capacity of monoliths of examples 21 to 24

Table 7

| Example | Amt, Ceravance 6350 wt%) | $S_{BET}$ $m^2/g$ | Selective $CO_2$ capacity total mg/g | Dynamic Selective $CO_2$ capacity mg/g |
|---|---|---|---|---|
| 21 | 1 | 873 | 28,6 | 21.7 |
| 22 | 5 | 904 | 27,9 | 19.1 |
| 23 | 2 | 906 | 27.1 | 21.8 |
| 24 | 3 | 914 | 28.1 | 19.2 |

The porous carbon monolith produced by the cold extrusion method (had a total selective $CO_2$ capacity (27-29 mg/g)

Example 25 - PEO as processing aids

A number of compositions was prepared using polyethylene oxides PEO) of various molecular weights as processing aids instead of polysaccharides or polyvinyl alcohols. The PVDC resin used was PVDC3 described before and PEO grades of various molecular weights were used as processing aids, all obtained from Sigma Aldrich. Hollow fibers were produced according to the procedure described for the production of the shaped bodies with cellulose ether as processing aid.

Table 8 shows the minimum amount needed of PEO for different aspects of the cold extrusion to obtain a hollow fibre with good processability. The amount given indicates the minimum amount in wt% of PEO as processing aid necessary to achieve the desired property level.

Table 8

| MW PEO KDa | Viscosity mPa.s | Water retention | Processability | Binding strength |
|---|---|---|---|---|
| 300 | 24,3 | 5 | 5 | 5 |
| 600 | 59.1 | 3 to 4 | 4 | 4 |
| 900 | 154.1 | 2 | 3 | 4 |
| 1000 | 174.3 | 2 | 3 | 4 |
| 2000 | 481.5 | 1 | 2 | 4 |
| 4000 | 1160.4 | <1 | <1 | 4 |
| 8000 | 3295.8 | <1 | <1 | 4 |

Both the water retention and the processability (how the hollow fibre is produced and keeps its form during extrusion) increases with increasing MW. Starting from a molecular weight of 900 kDa, a minimum of 2 wt% of PEO (2parts PEO for 100 parts of PVDC) was needed in order to assure good water retention. At molecular weight of 2 million Dalton or higher good water retention was obtained at PEO loadings of 1 wt% or lower. For the PEO polymers with molecular weight of 600 and 300 kDa, a minimum of 3-4 and 5 wt% was needed to create sufficient water retention. For the low molecular weight PEO at least 3-5 wt% of PEO had to be added in order to produce a paste with good processability. For the high molecular weight PEO, 2 wt% or lower had to be used. Above molecular weight of 1 million Dalton (also for the 900 kDa at 4 wt%), the paste became increasingly sticky and filamentous. For the high molecular weight PEO, increasing the PEO content, resulted in an increased viscosity of the pastes. This has to be kept in mind as the necessary extrusion pressure increase which might lead to problems when the pressure stability of the products is exceeded. The mechanical properties of the products obtained were excellent.

Example 26 - Direct extrusion of honeycomb monoliths

Direct extrusion of honeycomb green monoliths was performed with a custom ram extrusion equipment. A 100 cpsi with square channels (1.98 * 1.98 mm) honeycomb die with wall thickness of 700 $\mu$m, supplied by ZMB Braun, was mounted on a pneumatic syringe pump (Isco 500D). A paste composed of 500 g of PVDC5, 20g of Ceravance 6350 and 220 g water was produced by adding water to a dry blend of PVDC resin and processing aid followed by mixing with a planetary kneader equipped with a dough hook (Kenwood kMix KMX50). The obtained paste was pressed through

the die at constant flow rate (200 ml/min). During extrusion a constant pressure of 16 bar was recorded. The wet green monolith was recovered on a conveyor band. The outer skin was dried with a hot air gun and the partially dried wet green monolith was transferred in a ventilated oven and dried overnight at 50°C. The dried green monolith was pyrolysed in a 4 step program as described before, yielding a porous carbon honeycomb monolith with square channels (~1.3 mm * 1.3 mm) and wall thickness of μm about 465 μm. A sample of about 1.1 square cm and a length of 14 cm was cut out and the selective $CO_2$ capacity was determined as described earlier. The porous carbon honeycomb monolith had a selective $CO_2$ capacity of 25.3 mg/g.

Example 27 - Direct extrusion of honeycomb monolith

Direct extrusion of honeycomb green monoliths was performed with a custom ram extrusion equipment. A 100 cpsi with square channels (1.98 * 1.98 mm) honeycomb die with wall thickness of 700 μm, supplied by ZMB Braun, was mounted on a pneumatic syringe pump (Isco 500D). A paste composed of 500 g of PVDC4, 15 g of Ceravance 6350 and 215 g water was produced by adding water to a dry blend of PVDC resin and processing aid followed by mixing with a planetary kneader equipped with a dough hook (Kenwood kMix KMX50). The obtained paste was pressed through the die at constant flow rate (200 ml/min). During extrusion a constant pressure of 24 bar was recorded. The wet green monolith was recovered on a conveyor band. The outer skin was dried with a hot air gun and the partially dried wet green monolith was transferred in a ventilated oven and dried overnight at 50°C. The dried green monolith was pyrolysed in a 4 step program as described before, yielding a porous carbon honeycomb monolith with square channels (~1.45 mm * 1.45 mm) and wall thickness of μm about 525 μm. A sample of about 2.2 square cm and a length of 28 cm was cut out and the selective $CO_2$ capacity was determined as described earlier. The porous carbon honeycomb monolith had a selective $CO_2$ capacity of 29.9 mg/g.

Comparative example 28

The selective $CO_2$ adsorption capacity of a commercial available carbon honeycomb monolith, obtained from CarboTech AC GmbH was determined as described above. This carbon honeycomb monolith had a cell density of 200 cpsi, a wall thickness of about 330 μm and square shaped channels of about 1.4 * 1.4 mm. The said carbon honeycomb monolith is produced by the extrusion of a composition containing porous carbon (coconut shell activated carbon) and a ceramic binder. It has a selective $CO_2$ adsorption capacity of 11.4 mg/g which is significantly inferior to the products in accordance with the present invention.

Examples 29 to 34 - Effect of lubricants on the extrusion pressure

The effect of lubricants on the extrusion pressure was evaluated on a Rheo-tester 2000 Götffert capillary rheometer vice equipped with a barrel and "piston" of 12 mm of diameter and a die of 1 mm on 10 mm length. For this, pastes containing i) a PVDC resin, ii) a cellulose ether processing aid (Ceravance 6350) iii) water and iv) a lubricant were prepared.

The PVDC resin which was used for examples 29 to 34 is PVDC7.

PVDC7: A vinylidene chloride homopolymer powder having a melt temperature of 175.8°C, a porosity measured by absorption of DINP of 12.4%, and a granulometry characterized by $D_{10}$ = 173 μm, $D_{50}$ = 237 μm and $D_{90}$ = 322 μm, was produced by suspension polymerization followed by slurry purification, washing, filtering and drying in a fluidized bed. This powder was then cryogenically milled and sieved, so as to obtain PVDC7 sample having the following granulometry features: $D_{10}$ = 18 μm, $D_{50}$ = 46 μm, $D_{90}$ = 90 μm, corresponding to a span = 1.56.

The following commercially available lubricants were used:

- LUB-1: BAEROLUB® L-PL fatty acid glycerol ester ($C_{14-18}$),
- LUB-2: BAEROLUB® L-PK fatty acid ester ($C_{14-18}$),
- LUB-3: BAEROLUB® FTA mixture of fatty acids ($C_{14-18}$), and
- LUB-4: BAEROLUB® ZINCUM SW/F zinc stearate,
  all four obtained from Baerlocher GmbH.

The pastes were produced by adding water to a dry blend of PVDC7 resin, processing aid and lubricant (except for example 29 wherein no lubricant was used), followed by mixing with a planetary mixer (speedmixer DAC 400.1 FVZ; 2 min @ 2000 rpm). In case the lubricant was liquid at room temperature, the lubricant was mixed with PVDC7 resin prior to the addition of the processing aid and water. The pastes were pressed through the die at a constant shear rate of 100 $s^{-1}$. The radial pressure was monitored in function of time.

In all formulations/pastes, the PVDC, processing aid and water content were kept constant. Typically, pastes

contained 20g PVDC7, 0.4 g CERAVANCE® 6350 processing aid and 8 g of water, complemented in case of examples 30 to 34 with the lubricant.

Table 9 shows the compositions as well as the pressure during extrusion.

Table 9

| Example | Lubricant | Content (g) | Pressure (bar) |
|---|---|---|---|
| 29 | None | 0 | 90-100 |
| 30 | LUB-1 | 0.46 | 60-70 |
| 31 | LUB-2 | 0.116 | 25-35 |
| 32 | LUB-2 | 0.5 | 50-55 |
| 33 | LUB-3 | 0.149 | 15 |
| 34 | LUB-4 | 0.101 | 30-40 |

As can be seen from these examples, adding a lubricant results in a decrease of the pressure during the extrusion.

Example 35 - Direct extrusion of honeycomb monoliths with single screw extruder

Direct extrusion of honeycomb green monoliths was performed with a single screw extruder (ECT-Kema PZVQRG-8A) with 80 mm diameter. A 100 cpsi with square channels (1.98 * 1.98 mm) honeycomb die with wall thickness of 700 μm, supplied by ZMB Braun, was mounted on the extruder.

A paste composed of 7461 g PVDC4, 298 g CERAVANCE® 6350 processing aid, 56 g BAEROLUB® FTA and 3020 g water was produced by adding water to a dry blend of the PVDC resin, the processing aid and the lubricant, followed by mixing (using Eirich R 05/T mixer) and kneading (using IKA HKD 10 kneader).

The so-obtained paste was extruded through the die. During the extrusion, a constant pressure of 48 bar was recorded.

A wet green monolith was recovered on a conveyor band and dried in unmodified atmosphere at room temperature.

The dried green monolith was pyrolysed in a 4-step program as described before, yielding a porous carbon honeycomb monolith with square channels (~1.2 mm * 1.2 mm) and wall thickness of about 391 μm.

A sample of about 1.3 by 1.3 cm and a length of 15 cm was cut out and the selective $CO_2$ capacity was determined as described earlier. The porous carbon honeycomb monolith had a selective CO2 capacity of 33.7 mg/g.

## Claims

**1.** A method for forming an adsorptive carbonaceous shaped body comprising the following steps:

a) providing an extrudable composition comprising

a1) a carbon precursor composed of particles comprising a halogenated polymer having a melting point,
a2) a solvent and
a3) 0.1 to 8 wt%, based on the weight of the carbon precursor a1), of a processing aid selected from polysaccharides, polysaccharides derivatives, polyalkylene oxides, polyvinyl alcohol or polyvinyl alcohol derivatives obtained by acetalation of polyvinyl alcohol or mixtures thereof, wherein polysaccharides derivatives are polysaccharides in which the hydrogen atoms of the hydroxyl groups in the repeating unit of the polysaccharide have been replaced, partly or wholly, by other atoms or groups such as alkyl groups, carboxyalkyl or hydroxyalkyl groups,
wherein the solubility of the processing aids a3) in the solvent a2) is at least 1g/l whereas the solubility of the component a1) in the solvent a2) is at most 0.1 g/l and the ratio of the solubilities of the processing aid a3) and of the carbon precursor a1) in the solvent a2) is at least 10;

b) extruding the composition of step a) through a die to obtain a shaped green body
c) drying the obtained shaped green body, and

d) causing the pyrolysis of the halogenated polymer in the dried green body obtained in step c) to obtain an adsorptive carbonaceous shaped body;

wherein the content of the particles comprising the halogenated polymer with regard to the total weight of the extrudable composition excluding the solvent content and the amount of processing aid is at least 65 wt. %.

**2.** The method of claim 1 wherein the halogenated polymer is a vinylidene chloride homopolymer or copolymer which is preferably present in the form of a suspension.

**3.** The method of claim 1 or 2 wherein the halogenated polymer in the carbon precursor is present in the form of porous macroparticles having a mean diameter in the range of from 5 to 1000 μm, preferably in the range of from 5 to 140 μm.

**4.** The method of any of claims 1 to 3 wherein the processing aid is a polysaccharide or a polysaccharide in which the hydrogen atoms of the hydroxyl groups in the repeating unit of the polysaccharide have been replaced, partly or wholly, by other atoms or groups such as alkyl groups, carboxyalkyl or hydroxyalkyl groups which is preferably a modified or unmodified cellulose ether.

**5.** The method of any of claims 1 to 3 wherein the processing aid is a high molecular weight polyalkylene oxide having a weight average molecular weight in the range of from 300 kDa to 8000 kDa and is preferably a polyethylene oxide.

**6.** The method of any one of the preceding claims, wherein the extrudable composition further comprises a4) at least one lubricant.

**7.** The method of any one of the preceding claims, wherein the halogenated polymer is in the form of particles and the particles of the halogenated polymer comprise a4*) at least one lubricant.

**8.** The method according to claim 6 or 7, wherein the lubricant is chosen from: - fatty acids of formula $R^0$-COOH,- fatty acid esters of formula $R^0$-C(=O)-O-$R^1$,

- glycerol,
- monoglycerides of formula (F-1)

$CH_2 – O – C(=O) – R^0$
|
$CH – OH$
|
$CH_2 – OH$ (F-1)

- diglycerides of formula (F-2)

$CH_2 – O – C(=O) – R^0$
|
$CH – O – C(=O) – R^{0'}$
|
$CH_2 – OH$ (F-2)

- triglycerides of formula (F-3)

$$
\begin{array}{l}
CH_2 - O - C(=O) - R^{0} \\
| \\
CH - O - C(=O) - R^{0'} \\
| \\
CH_2 - O - C(=O) - R^{0''} \qquad (F\text{-}3)
\end{array}
$$

- alkali metal fatty acid salts of formula $R^0$-COOM,
- alkaline-earth metal fatty acid salts of formula $R^0$-COO-M'-OOC-$R^{0'}$,
- fatty acid amides of formula $R^0$-CONH-$R^1$ or $R^0$-CONH-$R^2$,
- fatty acid diamides of formula $R^0$-CONH-$R^3$-HNOC-$R^{0'}$ and mixtures thereof,

wherein:

- $R^0$, $R^{0'}$ and R° ", independently from each other, represent a $C_3$-$C_{25}$ aliphatic group
- $R^1$ represents a $C_4$-$C_{26}$ aliphatic group,
- $R^2$ represents a $C_1$-$C_3$ alkyl or a $C_1$-$C_3$ hydroxyalkyl group,
- $R^3$ represents a $C_2$-$C_8$ divalent aliphatic group,
- M represents an alkali metal, and
- M' represents an alkaline-earth metal.

**9.** A wet green body obtainable after step b) of the method of any one of claims 1 to 8.

**10.** A shaped green body obtainable after step c) of the method of any one of claims 1 to 8.

**11.** The green body in accordance with claim 9 or 10 which is a carbon precursor monolith, preferably a carbon precursor monolith with a honeycomb structure, more preferably a strand, a fibre, a tube, a block, a brick, a disc, a laminate, a cylindrical form, a pellet or a bead.

**Patentansprüche**

**1.** Verfahren zur Herstellung eines adsorptionsfähigen kohlenstoffhaltigen Formkörpers, umfassend die folgenden Schritte:

a) Bereitstellen einer extrudierbaren Zusammensetzung umfassend

a1) einen Kohlenstoffvorläufer, bestehend aus Partikeln, die ein halogeniertes Polymer mit einem Schmelzpunkt umfassen,
a2) ein Lösungsmittel und
a3) 0,1 bis 8 Gew.-%, bezogen auf das Gewicht des Kohlenstoffvorläufers a1), an einem Verarbeitungshilfsmittel ausgewählt aus Polysacchariden, Polysaccharidderivaten, Polyalkylenoxiden, Polyvinylalkohol und Polyvinylalkoholderivaten, erhalten durch Acetalierung von Polyvinylalkohol oder Gemischen davon, wobei Polysaccharidderivate Polyasccharide sind, bei denen die Wasserstoffatome der Hydroxygruppen in der Wiederholungseinheit des Polysaccharids teilweise oder vollständig durch andere Atome oder Gruppen, wie z.B. Alkylgruppen, Carboxyalkyl- oder Hydroxyalkylgruppen, ersetzt worden sind,
wobei die Löslichkeit der Verarbeitungshilfsmittel a3) in dem Lösungsmittel a2) wenigstens 1 g/l beträgt, während die Löslichkeit der Komponente a1) in dem Lösungsmittel a2) höchstens 0,1 g/l beträgt und das Verhältnis der Löslichkeiten des Verarbeitungshilfsmittels a3) zu dem Kohlenstoffvorläufer a1) in dem Lösungsmittel a2) wenigstens 10 beträgt;

b) Extrudieren der Zusammensetzung von Schritt a) durch eine Düse, um einen geformten Grünkörper zu erhalten,
c) Trocknen des erhaltenen geformten Grünkörpers und
d) Bewirken von Pyrolyse des halogenierten Polymers in dem bei Schritt c) erhaltenen getrockneten Grünkörper, um einen adsorptionsfähigen kohlenstoffhaltigen Formkörper zu erhalten;
wobei der Gehalt an den Partikeln, die das halogenierte Polymer umfassen, bezogen auf das Gesamtgewicht

der extrudierbaren Zusammensetzung ohne den Lösungsmittelgehalt und die Menge an Verarbeitungshilfsmittel, wenigstens 65 Gew.-% beträgt.

**2.** Verfahren gemäß Anspruch 1, wobei das halogenierte Polymer ein Vinylidenchlorid-Homopolymer oder -Copolymer ist, das vorzugsweise in der Form einer Suspension vorliegt.

**3.** Verfahren gemäß Anspruch 1 oder 2, wobei das halogenierte Polymer in dem Kohlenstoffvorläufer in der Form von porösen Makropartikeln mit einem mittleren Durchmesser in dem Bereich von 5 bis 1000 pm, vorzugsweise in dem Bereich von 5 bis 140 pm, vorliegt.

**4.** Verfahren gemäß einem der Ansprüche 1 bis 3, wobei das Verarbeitungshilfsmittel ein Polysaccharid oder ein Polysaccharid, bei dem die Wasserstoffatome der Hydroxygruppen in der Wiederholungseinheit des Polysaccharids teilweise oder vollständig durch andere Atome oder Gruppen, wie z.B. Alkylgruppen, Carboxyalkyl- oder Hydroxyalkylgruppen, ersetzt worden sind, ist und das vorzugsweise ein modifizierter oder unmodifizerter Celluloseether ist.

**5.** Verfahren gemäß einem der Ansprüche 1 bis 3, wobei das Verarbeitungshilfsmittel ein Polyalkylenoxid mit hohem Molekulargewicht mit einem gewichtsgemittelten Molekulargewicht in dem Bereich von 300 kDa bis 8000 kDa ist und vorzugsweise ein Polyethylenoxid ist.

**6.** Verfahren gemäß einem der vorstehenden Ansprüche, wobei die extrudierbare Zusammensetzung ferner a4) wenigstens ein Schmiermittel umfasst.

**7.** Verfahren gemäß einem der vorstehenden Ansprüche, wobei das halogenierte Polymer in der Form von Partikeln vorliegt und die Partikel des halogenierten Polymers a4*) wenigstens ein Schmiermittel umfassen.

**8.** Verfahren gemäß Anspruch 6 oder 7, wobei das Schmiermittel ausgewählt ist aus: - Fettsäuren der Formel R°-COOH, - Fettsäureestern der Formel $R^0$-C(=O)-O-$R^1$,

- Glycerol,
- Monoglyceriden der Formel (F-1),

$CH_2 - O - C(=O) - R^0$
|
$CH - OH$
|
$CH_2 - OH$ (F-1)

- Diglyceriden der Formel (F-2)

$CH_2 - O - C(=O) - R^0$
|
$CH - O - C(=O) - R^{0'}$
|
$CH_2 - OH$ (F-2)

- Triglyceriden der Formel (F-3)

$CH_2 - O - C(=O) - R^0$
|
$CH - O - C(=O) - R^{0'}$
|
$CH_2 - O - C(=O) - R^{0''}$ (F-3)

- Alkalimetall-Fettsäuresalzen der Formel R°-COOM,
- Erdalkalimetall-Fettsäuresalzen der Formel R°-COO-M'-OOC-$R^{0'}$,
- Fettsäureamiden der Formel $R^0$-CONH-$R^1$ oder $R^0$-CONH-$R^2$,
- Fettsäurediamiden der Formel $R^0$-CONH-$R^3$-HNOC-$R^{0'}$, und Gemischen davon,

wobei:

- R°, $R^{0'}$ und R°" unabhängig voneinander eine aliphatische $C_3$-$C_{25}$-Gruppe darstellen,
- $R^1$ eine aliphatische $C_4$-$C_{26}$-Gruppe darstellt,
- $R^2$ eine $C_1$-$C_3$-Alkyl- oder eine $C_1$-$C_3$-Hydroxyalkylgruppe darstellt,
- $R^3$ eine zweiwertige aliphatische $C_2$-$C_8$-Gruppe darstellt,
- M ein Alkalimetall darstellt und
- M' ein Erdalkalimetall darstellt.

**9.** Feuchter Grünkörper, erhältlich nach Schritt b) des Verfahrens gemäß einem der Ansprüche 1 bis 8.

**10.** Geformter Grünkörper, erhältlich nach Schritt c) des Verfahrens gemäß einem der Ansprüche 1 bis 8.

**11.** Grünkörper gemäß Anspruch 9 oder 10, der ein Kohlenstoffvorläufer-Monolith ist, vorzugsweise ein Kohlenstoffvorläufer-Monolith mit einer Wabenstruktur, bevorzugter ein Strang, eine Faser, ein Rohr, ein Block, ein Ziegel, eine Scheibe, ein Laminat, eine zylindrische Form, ein Pellet oder eine Perle.

## Revendications

**1.** Procédé pour la formation d'un corps façonné carboné adsorbant comprenant les étapes suivantes :

a) fourniture d'une composition pouvant être extrudée comprenant

a1) un précurseur de carbone composé de particules comprenant un polymère halogéné ayant un point de fusion,
a2) un solvant et
a3) 0,1 à 8 % en poids, sur la base du poids du précurseur de carbone a1), d'un auxiliaire de traitement choisi parmi des polysaccharides, des dérivés de polysaccharides, des poly(oxyde d'alkylène), un poly(alcool vinylique) ou des dérivés de poly(alcool vinylique) obtenus par acétalation d'un poly(alcool vinylique) ou des mélanges correspondants, les dérivés de polysaccharides étant des polysaccharides dans lesquels les atomes d'hydrogène des groupes hydroxyle dans le motif répétitif du polysaccharide ont été remplacés, partiellement ou totalement, par d'autres atomes ou groupes tels que des groupes alkyle, des groupes carboxyalkyle ou hydroxyalkyle,
la solubilité des auxiliaires de traitement a3) dans le solvant a2) étant d'au moins 1 g/l tandis que la solubilité du composant a1) dans le solvant a2) est d'au plus 0,1 g/l et le rapport des solubilités de l'auxiliaire de traitement a3) et du précurseur de carbone a1) dans le solvant a2) étant d'au moins 10 ;

b) extrusion de la composition de l'étape a) à travers une matrice pour obtenir un corps vert façonné
c) séchage du corps vert façonné obtenu, et
d) le fait de provoquer la pyrolyse du polymère halogéné dans le corps vert séché obtenu dans l'étape c) pour obtenir un corps façonné carboné adsorbant ;

la teneur des particules comprenant le polymère halogéné par rapport au poids total de la composition pouvant être extrudée à l'exclusion de la teneur en solvant et de la quantité d'auxiliaire de traitement, étant d'au moins 65 % en poids.

**2.** Procédé selon la revendication 1, le polymère halogéné étant un homopolymère ou copolymère de chlorure de vinylidène qui est préférablement présent sous la forme d'une suspension.

**3.** Procédé selon la revendication 1 ou 2, le polymère halogéné dans le précurseur de carbone étant présent sous la forme de macroparticules poreuses ayant un diamètre moyen dans la plage allant de 5 à 1 000 pm, préférablement dans la plage allant de 5 à 140 pm.

4. Procédé selon l'une quelconque des revendications 1 à 3, l'auxiliaire de traitement étant un polysaccharide ou un polysaccharide dans lequel les atomes d'hydrogène des groupes hydroxyle dans le motif répétitif du polysaccharide ont été remplacés, partiellement ou totalement, par d'autres atomes ou groupes tels que des groupes alkyle, des groupes carboxyalkyle ou hydroxyalkyle qui est préférablement un éther de cellulose modifiée ou non modifiée.

5. Procédé selon l'une quelconque des revendications 1 à 3, l'auxiliaire de traitement étant un poly(oxyde d'alkylène) à poids moléculaire moyen élevé dans la plage allant de 300 kDa à 8 000 kDa et étant préférablement un poly(oxyde d'éthylène).

6. Procédé selon l'une quelconque des revendications précédentes, la composition pouvant être extrudée comprenant en outre a4) au moins un lubrifiant.

7. Procédé selon l'une quelconque des revendications précédentes, le polymère halogéné étant sous la forme de particules et les particules du polymère halogéné comprenant a4*) au moins un lubrifiant.

8. Procédé selon la revendication 6 ou 7, le lubrifiant étant choisi parmi :

- des acides gras de formule $R^0$-COOH,
- des esters d'acides gras de formule $R^0$-C(=O)-$OR^1$,
- le glycérol,
- des monoglycérides de formule (F-1)

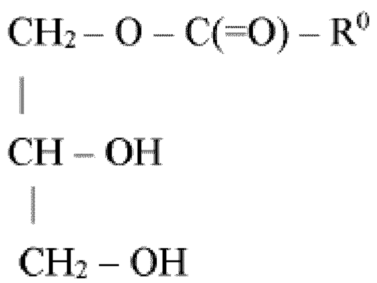

(F-1)

- des diglycérides de formule (F2)

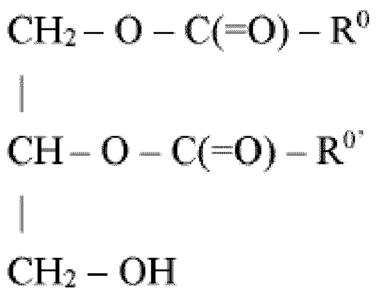

(F-2)

- des triglycérides de formule (F-3)

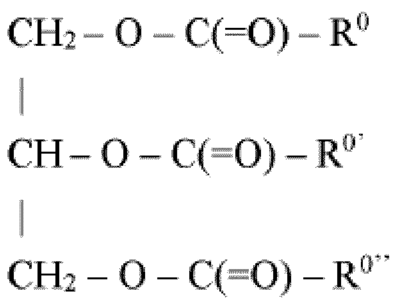

(F-3)

- des sels d'acides gras de métal alcalin de formule $R^0$-COOM,
- des sels d'acides gras de métal alcalino-terreux de formule

**$R^0$-COO-M'-OOC-$R^{0'}$**,

- des amides d'acides gras de formule

**$R^0$-CONH-$R^1$**

ou

**$R^0$-CONH-$R^2$,**

- des diamides d'acides gras de formule

**$R^0$-CONH-$R^3$-HNOC-$R^{0'}$**

et des mélanges correspondants,
- R°, $R^{0'}$, $R^{0''}$, indépendamment les uns des autres, représentant un groupe aliphatique en $C_{3-25}$,
- $R^1$ représentant un groupe aliphatique en $C_{4-26}$,
- $R^2$ représentant un groupe alkyle en $C_{1-3}$ ou hydroxyalkyle en $C_{1-3}$,
- $R^3$ représentant un groupe aliphatique divalent en $C_{2-8}$,
- M représentant un métal alcalin, et
- M' représentant un métal alcalino-terreux.

**9.** Corps vert humide pouvant être obtenu après l'étape b) du procédé selon l'une quelconque des revendications 1 à 8.

**10.** Corps vert façonné pouvant être obtenu après l'étape c) du procédé selon l'une quelconque des revendications 1 à 8.

**11.** Corps vert conformément à la revendication 9 ou 10 qui est un monolithe de précurseur de carbone, préférablement un monolithe de précurseur de carbone doté d'une structure en nid d'abeilles, plus préférablement un brin, une fibre, un tube, un bloc, une brique, un disque, un stratifié, une forme cylindrique, une pastille ou une bille.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 17184587
- US 5914294 A
- US 4518704 A
- US 20020103081 A
- US 5356852 A
- US 5389325 A
- US 5356682 A
- US 5389326 A
- US 20030178357 A
- US 20110262689 A
- US 20120276324 A
- US 8354055 B
- US 20050066817 A
- WO 2015109381 A
- US 20040107838 A
- JP H10265273 A